# EUROPEAN PATENT SPECIFICATION

(11) **EP 1 716 043 B1**
(45) Date of publication and mention of the grant of the patent: **20.10.2010**
(21) Application number: 04808880.1
(22) Date of filing: 14.12.2004
(51) Int. Cl.: B63H 25/00, G05B 23/02

(54) **METHOD AND SYSTEM FOR TESTING A CONTROL SYSTEM OF A MARINE VESSEL**
VERFAHREN UND SYSTEM ZUM TESTEN EINES STEUERSYSTEMS EINES WASSERFAHRZEUGS
PROCEDE ET SYSTEME DE TEST D'UN SYSTEME DE COMMANDE D'UN BATIMENT DE MER

(30) Priority: 16.02.2004 NO 20040674
(43) Date of publication of application: 02.11.2006
(73) Proprietor: Marine Cybernetics AS, 7075 Tiller (NO)
(72) Inventor: FOSSEN, Thor, Inge, N-7046 Trondheim (NO); SØRENSEN, Asgeir, Johan, N-7079 Flatåsen (NO); EGELAND, Olav, N-7049 Trondheim (NO); JOHANSEN, Tor Arne, N-7560 Vikhamar (NO)
(74) Representative: Haley, Stephen
(86) International application number: PCT/NO2004/000386
(87) International publication number: WO 2005/077754

(56) References cited:
- US-A- 5 260 874
- US-B1- 6 298 318
- US-B1- 6 526 356

## Description

### Introduction.

The present invention relates to a system for acquiring a verifiable control system signature after approval of a marine vessel by testing and / or certification by a class society. Further the invention relates to remote testing of a vessel, and a combination of the two methods, i.e. remote acquisition of a control system signature. Further, a system for remotely controlled testing and vessel simulation is provided.

A control system can generally be seen as a system that provides control signals to a physical process, and that receives measurements from a device or a physical process or possibly from other physical processes. The measurements and an algorithm are used to compute the control signals so that the physical system responds as desired. If the physical process is a motorized vessel, then the control system may receive measurements in the form of a vessel position, course and velocity, and can thereby calculate the control signals to propellers and rudders so that one or more of vessel position, course and velocity are achieved or maintained.

### Problem description.

The physical process, in this case in the form of a vessel, may be influenced by external events like a change in wind, waves and current, or by unexpected events like loss of motor power for one or more propellers, or failure in the function of a rudder. It is desired and expected that the control system for the vessel can handle external influence and external events so that the vessel can maintain a safe state. A safe state may for example be that that the vessel maintains the desired position or velocity, or that it avoids undesired positions (to avoid collision or grounding), that it avoids a situation of uncontrolled drift, that it maintains a desired course, etc. Moreover, it is expected that the control system in the case of loss of sensor signals or errors in sensors should not do undesired and unfortunate compensations like a sudden change in ballast pumping in response to loss of a realistic signal in a roll or pitch sensor, or sudden corrections of an apparent error in position.

### Measurements to a control system.

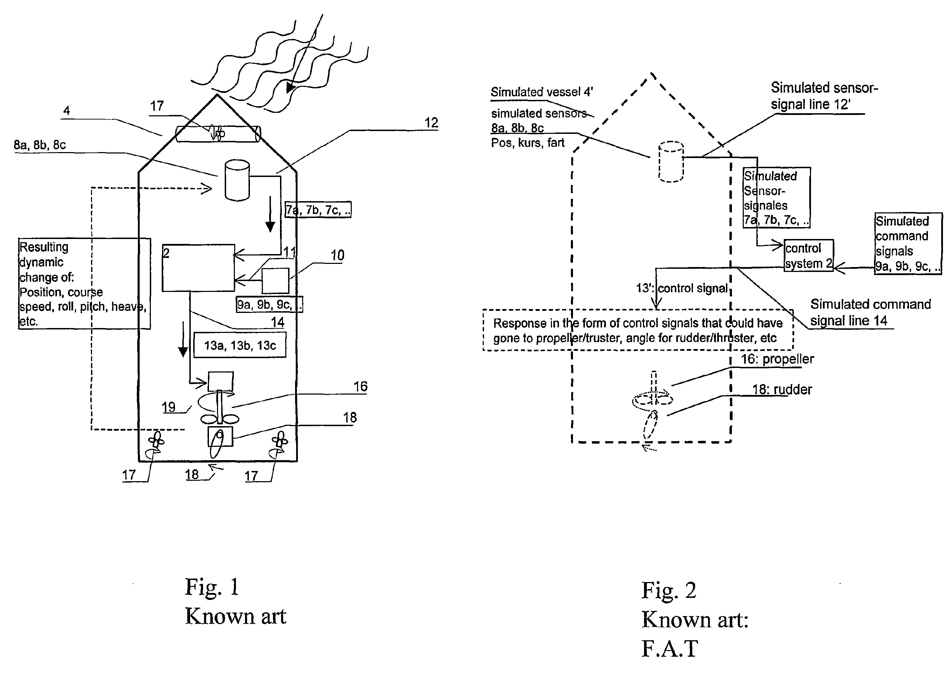

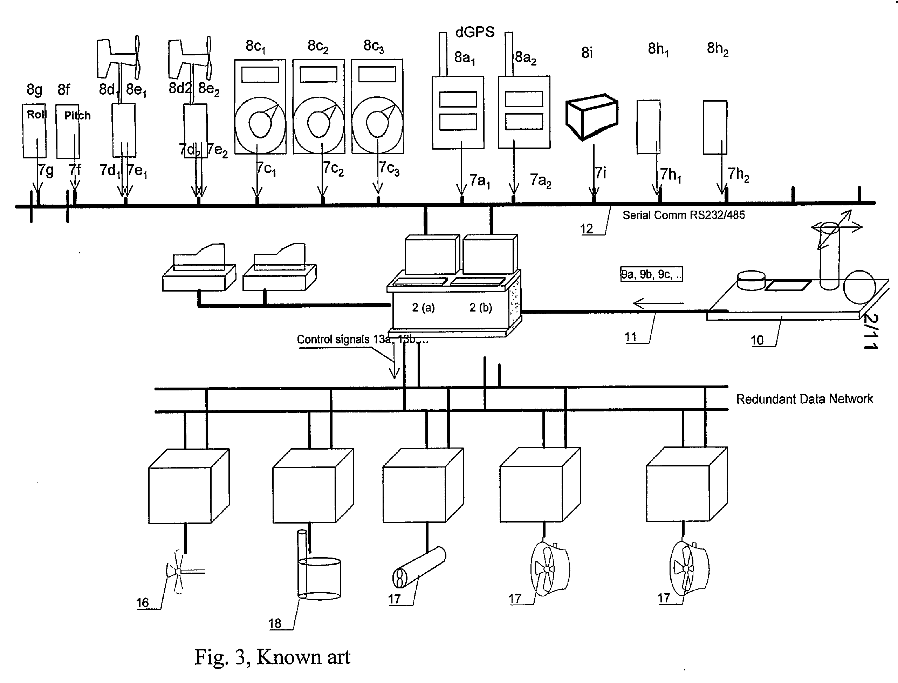

A control system for a ship, with inputs from instruments that give measurements, and with outputs to actuators, like propelling devices, control surfaces and other control devices that are to be given control signals, is shown in Fig. 1 and in Fig. 3. This type of control system can receive measurements in the form of sensor signals from a number of sources:
- roll/pitch/heave sensors,
- anemometer for measuring relative wind speed and direction,
- gyro compass,
- GPS sensors or GPS positioning systems,
- inertial navigation systems that on basis of acceleration mea surements calculate velocity by integration with respect to time, and position by double integration with respect to time,
- hydroacoustic position sensors relative to fixed points at the sea-floor,
- taut-wire system where the direction and length of one or more tensioned wires from the vessel to points at the seafloor is observed,
- command signals for change of course or desired course, desired position, or desired velocity of the vessel,
- shaft speed and load on propellers and motors,
- rudder angle sensor,
- level sensors for loading tanks,
- ballast level sensors,
- fuel level sensors,
- engine state, cooling water temperature, cooling water valves, lubricating oil pressure and level, etc.,

The control system is to give control signals to actuators like propulsors, control surfaces and other control devices. The propulsors may be ordinary propellers, tunnel thrusters, azimuth thrusters and water jets, and for some vessels also a mooring system that is designed to pull the vessel to the right position. Control surfaces include rudders for steering and active foils for damping or counteracting of wave motion. Control signals can also be given to other control devices like ballast pumps and associated valves to correct the roll angle or the pitch angle.

### Problems related to control for dynamic positioning, DP.

If the vessel is a petroleum drilling vessel or a petroleum production vessel, for example a drilling ship or an drilling platform, a petroleum production ship or a petroleum production platform, the control system may also receive measurements of the heave motion from a heave accelerometer, and output a control signal to an active heave compensation system for a riser, a drill string, cranes, etc. where mechanical equipment can be connected to the seafloor and where it can be important to compensate for the motion of the vessel, in particular heave. A normal use of control systems for petroleum activity at sea is for dynamic positioning of the vessel, that is, that the vessel uses actuators like azimuth thrusters to maintain desired position during drilling or during production of petroleum. A vessel that is moored and may rotate about a rotating turret with mooring lines to the seafloor can also have a control system that gives a varying control signal to propellers or thrusters to assist in keeping the desired position when the vessel is rotated because the direction of the weather or current changes, so that the thrusters contribute with forces to compensate for changes in the tension of mooring lines when the forces turn. In the same way it may be envisaged that that the control system can give control signals to increase or decrease tension in the mooring lines of the same reason.

### Problem related to testing of the control system of a vessel.

A ship inspector can visit a vessel and make an on-board test of the control system. The on-board test may be conducted by disconnecting or connecting sensor systems and monitoring the response of the system in different failure situations. However, to make an entirely realistic test of the vessel in conditions that are to be expected, it would be necessary to wait for or to seek weather situations and sea states that are expected, but rarely occur, or to wait for or to provoke situations that could be expected if certain errors occurred, but that would be dangerous if such situations occurred accidentally or by provocation. It will hardly be considered as an option to expose the vessel to extreme situations, like abnormally large errors in ballast distribution, in order to check if the control system gives control signals for correct compensation of the error. Such kind of tests will normally not be performed.

It would be possible to perform a simulation of sensor data to the control system on-board and monitor which control signals that the control system gives to actuators like propellers, rudders and thrusters, but this would require a local interconnection of the control system to a test system. However such testing is, according to the applicant's knowledge, not known at the time of filing this application. Such interconnecting and testing could be conducted on the vessel, but a disadvantage of visiting the vessel to be tested is often related to a long way of travel for the ship inspector, that the ship inspector must bring equipment for interconnection to the control system inputs for measurements, and equipment for interconnection to the control system outputs for response in the form of control signals that are normally sent to the actuators of the vessel, and in addition a data library that at least has to include the configuration of the actual vessel to be tested. Moreover, the travel time from one vessel that is to be tested and certified to a next vessel can make it difficult for the inspector to perform inspections at a sufficiently high rate, so that the next vessel will have to wait, with the economic disadvantages caused by the waiting, if the vessel cannot be taken into use without being tested and properly certified. It may also cause a concealed physical danger to use a vessel where lack of testing of the control system does not reveal possible errors.

The conclusion of the above is that there is a need for method to verify that a vessel control system has the same response as when it was approved, in order to indicate whether the control system should be retested and re-approved or not after some time or after modifications of any essential part of the ship.

In factory production of a control system it is usual to perform a so-called factory acceptance test (FAT) of the control system (including hardware and software) where the manufacturer feeds simulated sensor data to the control system and monitors which control signals the control system gives as a response to the simulated data. This type of FAT can only reveal errors where measurements from sources that the manufacturer has foreseen to exist, and where the control signals are only related equipment that the manufacturer have foreseen. Thus, it will not be known with certainty how the control system will interact with equipment, systems, configurations or situations that the manufacturer of the control system has not foreseen. In addition, in a FAT the control system will not be tested in the connection where the control system is installed and connected for use on the vessel.

### Example of a practical problem in dynamic positioning.

In dynamic positioning of a vessel (4) that is held in desired position of propellers, rudders or thrusters of the tunnel or azimuth type, it may be essential for the operation that the vessel keeps its position within a very small radius from the desired position, e.g. a radius of 2 m. Several events may be undesired. The vessel may experience loss of motor power for one or more propellers or rudders, and have to increase the motor power on the remaining propellers and/or thrusters and perhaps rotate the still functioning remaining rudders or thrusters. One may also experience serious error situations in which the control system loses some of the signals from the connected sensors so that an undesired incident may occur. The inventors have knowledge of an instance in which a vessel, in the actual case a drilling platform, was to be located at a fixed position in the open sea and was drilling to make a petroleum well in the seafloor. The drilling platform was to maintain the desired fixed position by means of so-called dynamic positioning or "DP", that is, the control system was arranged to keep the vessel in the desired position by means of position measurements and motor power, without the use of mooring lines to the seafloor. The drilling platform was equipped with a double set of DGPS receivers that calculate the geographic position of the vessel based on radio signals received from a number of navigation satellites. In addition the drilling platform was equipped with a double set of hydroacoustic position sensors that measured the position of the vessel with respect to transponders at fixed points on the seafloor. At a given time during drilling, the vessel having riser connection to a wellhead and drill string connection to the drilling hole and actively drilling, an event took place so that the DGPS receivers showed a sudden change in position of about 75 meters, although no such change in position actually had occurred. Such an error may be called a "step change" error. The hydroacoustic sensors continued to indicate a stable position at the desired position over the drill hole. The control system continued to control propellers and rudders so that the drilling platform without interruption was held at the correct dynamic position on basis of the hydroacoustic sensor measurement signals. However, it turned out that after 5 minutes the drilling platform suddenly started to move off towards the desired position according to the then erroneous DGPS signals. It became necessary to discontinue the drilling by effecting associated emergency procedures involving riser disconnection and cutting of the drill string. Such a situation may involve a risk for blow-out of gas and oil, or pollution by spilling of drilling fluid. Such a situation may also present a risk to the vessel and the crew. After a discontinued DP-drilling it may be very expensive to recover continued drilling. The applicants assume that the initial sudden change of the position calculated by the DGPS receivers may have been caused by disturbances in the signal transmission from the GPS satellites to the receivers, or by a situation of having an insufficient number of available satellites. The loss of the DGPS signal may have been ignored by the control system because of quality conditions in the software of the control system requiring that such a calculated position must have been stable during the preceding 5 minutes to be considered to be real. In this way, the designer of the control system may have believed to prevented undesired sudden changes in position due to erroneous signals. However, the new and changed, but nevertheless stable, false position calculated from the DGPS receivers may after 5 minutes have been regarded as stable and was thus considered to be reliable according to the logical program of the control system, and may have been given a higher priority than the measurements provided by the hydroacoustic transponders. This may explain why the control system attempted to control the drilling platform to a new position that the control system had evidently interpreted as the desired position, despite the facts that drilling was in progress and despite the fact that the hydroacoustically measured position indicated that the position should be kept unchanged.

### Problems related to changed configurations in a vessel:

### Reprogramming of a control system

After a control system has been put to use in a vessel there will in many cases be a need for reprogramming or modification of the software in the control system. The purpose for doing this may be a need for changing numerical values related to alarm limits and acceptable variation in a sensor signal in the algorithm of the program, or it can be a need for the introduction of new tests and functions in the control system. When the reprogramming or modification of the software is completed there is a need for testing the control system to see if the changes have given the intended effect, and to investigate if new and unintended errors have appeared as a consequence of the changes. At present, satisfactory test equipment and procedures are not available for the testing of the control systems on a vessel after such changes.

### Modifications in an existing control system, e.g. when replacing cranes.

Marine operations related to oil and gas exploration and production are done by vessels with cranes for installation and intervention on modules on the seafloor. This type of cranes has control systems that compensates for the vertical motion of the vessel. The mode of operation and the function of the crane in safety-critical situations will to a large extent depend on the detailed design of the software of the control system, which will vary from one crane to another. Procedures have been established for the testing of the mechanical design of such cranes. In contrast to this there are no established systems or methods for the testing of the software of the crane control systems. The reason for this is that the response of the crane will depend on the sea state and the motion of the vessel in addition to the mechanical design and the control system of the crane. A required detailed testing of a crane system on a vessel should therefore involve both the dynamics of the vessel including the relevant control systems of the vessel, and in addition, the dynamics of the crane including the control system of the crane.

### Repair / replacement of sensors for a control system.

When sensors for a control system are replaced or modified, there is a need for adjustment of alarm limits, for limits for acceptable variations in the sensor signals. It is customary for a control system to have redundant sensor systems so that several sensors may be used to measure the same physical quantity. As an example of this the position of a vessel can be measured by inertial sensors, two or more GPS-receivers and two hydroacoustic sensor systems. From these measurement data the position of the vessel is determined by means of an algorithm in the control system. This algorithm will depend on the properties of the various sensors with respect to accuracy and properties like long term stability versus accuracy under rapid position variations. Replacement or modification of a sensor introduces the need for testing of the total sensor system to investigate whether the resulting new combination of sensors gives acceptable position measurements for use in a control system.

### Repair / modification / replacement of actuators.

After replacement or modification of an actuator, a control system may give a significantly different response for the vessel. The reason for this is that a new or modified actuator may give a different control action to the vessel than what was assumed during the development of the control system. An example of this is in the use of thrusters for dynamic positioning, where the relation between the shaft speed of the thruster and the thrust must be known when the control system is tuned. If a thruster is changed, then the relation between the shaft speed of the thruster and the thrust may be changed, and it will be necessary to test the vessel with the control system to investigate if the system still performs according to specifications.

Thus that there is a need for a more effective testing of vessel control systems, also in the cases where the vessel has been modified from its previous configuration, and where old and new components of the vessel have not been previously combined, and has to be tested in the new combination.

### Known art in the field.

The US-Patent 6 298 318 "Real-time IMU signal emulation method for test of guidance navigation and control systems" describes an emulation method for testing of a plane by emulating the motion using a so-called 6 degrees-of-freedom (6 DOF) flight simulator and where signals from a so-called inertial navigation module to a "guidance, navigation and control" system on board the aircraft are generated by simulation. This US patent does not discuss problems related to dynamic positioning of a vessel in drilling operations or some other form of stationary operation, it does not mention the use of cranes, navigation of connected underwater equipment, integration of hydroacoustic positioning equipment, problems related to ballasting, and does not consider ocean waves. A ship will normally not have 6 DOF, but instead has 3 DOF as it has self-restoring action in heave / roll / and pitch motion being a required property of a surface vessel.
The US-patent 5023791 "Automated test apparatus for aircraft flight controls" describes an automated test apparatus for the testing of flight control systems of an aircraft as part of an integrated system for testing a plurality of flight control systems. The automated test apparatus includes a system controller having memory for storing programmed instructions that control operation of the automated test apparatus, and for storing resulting flight controls system test data. The automated test apparatus includes a keyboard, a touch-screen, and a tape drive for entering programmed instructions and other information into the automated test apparatus, and for outputting test data from the system controller. Instruments included in the automated test apparatus and controlled by the system controller generate test signals that are input to the aircraft's flight controls system, and monitor resulting test data signals that are produced by the flight controls system. The automated test apparatus is connected by an interface cable to an onboard central maintenance computer included in the aircraft. The central maintenance computer includes a non-volatile memory that is programmed to run onboard tests of the flight controls system, and is controlled by the system controller during testing in accordance with the programmed instructions to run the onboard tests.

US-patent 5541863 "Virtual integrated software testbed for avionics" describes a virtual integrated software testbed for avionics which allows avionics software to be developed on a host computer using a collection of computer programs running simultaneously as processes and synchronized by a central process. The software testbed disclosed uses separate synchronized processes, permits signals from an avionics device to be generated by a simulation running on the host computer or from actual equipment and data bus signals coming from and going to actual avionics hardware is connected to their virtual bus counterparts in the host computer on a real-time basis.

US-patent 5260874 "Aircraft flight emulation test system" describes an aircraft test system that generates stimuli that emulate the stimuli received by an aircraft when in flight. The aircraft test system includes a number of instruments for generating the number of processor-controllable instruments for generating stimuli received by an aircraft when in flight. The system also includes a number of instruments that monitor the response of the various aircraft components to the stimuli to which the aircraft is exposed. A processor in response to the output signal from the aircraft components directs the stimuli generating instruments to produce stimuli that emulate those received by the aircraft as it moves through the air. The system thus generates an initial set of stimuli similar to what an aircraft would be exposed to when in flight; monitors the response of the aircraft to the stimuli to which it is exposed; and, in response generates an updated set of stimuli to the aircraft. The system also records the response of the output responses of aircraft components so that they could be monitored by personnel charged with insuring that the aircraft is functioning properly. The system can also be used to train flight crews since it can be used to place the aircraft "in the loop" during a flight emulation.

US-patent 6505574 "A vertical motion compensation for a crane's load" describes a method and a system for reducing sea state induced vertical motion of a shipboard crane's load using winch encoders, boom angle sensor, turning angle sensor and motion sensor that all feed measurements into a central processor that controls the crane on basis of the measurements and the commands from a crane operator.

### A solution to the problem, short summary of the invention.

A solution to some of the problems described above, is a method for verifying a control system of a vessel, in which said control system in its operative state is arranged for receiving sensor signals from sensors and command signals from one or more command input devices, and in which said control system as a response to said measurements and command signals, provides control signals to said vessel's actuators in order to maintain a desired position, velocity, course or other state of said vessel; in which the method comprises the following novel steps:
* during a first time (t0), disconnecting the reception of one or more real sensor signals to said control system and replacing said one or more of said real sensor signals by a first test sequence (T0) comprising one or more artificial measurements from a test signal source to said control system;
* letting said control system work based on said real and / or artificial sensor signals to generate control signals to be recorded as said control system's (2) control signals as a response (S0) to said first test sequence (T0) for said first time (t0) on a control signal logger (42);
* storing said control system's (2) response (S0) to said first test sequence (T0) at said first time (t0) as said control system's (2) "signature" response (S0);
said method having the purpose of, at a later time (t1, t2, t3, ..), to use the same given test sequence (T0) input to said control system (2), and to record a later response (S1, S2, S3, ..) from said control system (2), and determining whether said later response (S1, S2, S3, ..) is generally similar to said signature response (S0) to verify that said control system (2) is unchanged, or whether said later response (S1, S2, S3, ..) is significantly different from said signature response (S0) to indicate that said control system (2) has been changed.

Additional steps of the method of the invention are found in the independent claims.

### Brief description of the drawings.

The invention is illustrated in the enclosed drawings in Fig. 1 to Fig. 10. The drawings are meant to illustrate the invention and shall not be construed to restrict the invention, which is only restricted by the enclosed patent claims
Fig. 1 illustrates a vessel with a control system. The control system receives measurements of position, course, velocity, and other measurements from navigational instruments and other instruments, and receives commands from a position specification device, the control panel of the control system, a velocity specification device, and a velocity or shaft speed specification device for the propeller or for possible thrusters. The control system can also receive measurements of relative wind direction and relative wind speed form an anemometer, and it can receive or calculate information about sea state, that is, wave elevation, roll period, pitching, etc. The control system can be designed to sequentially output shaft speed to propellers and angles to rudders so that the desired position, course and velocity are achieved.
Fig. 2 illustrates a factory acceptance test, "FAT", of a control system after manufacturing, the control system built for a vessel but not yet installed in a vessel. The control system is connected to an interface with simulated sensor signals and where the control system gives response in the form of control signals intended for, but not connected to actuators. However, the FAT may not reflect the final constitution of the vessel, as other cranes, other heave compensation systems, other, newly developed sensors may be used with the finally launched and tested vessel, so a FAT may eventually not be relevant at the point of class society sea testing and approval.
Fig. 3 illustrates a typical set-up of a known control system for a ship, with the connected sensors, command input devices and actuators all connected to the ship's control system.

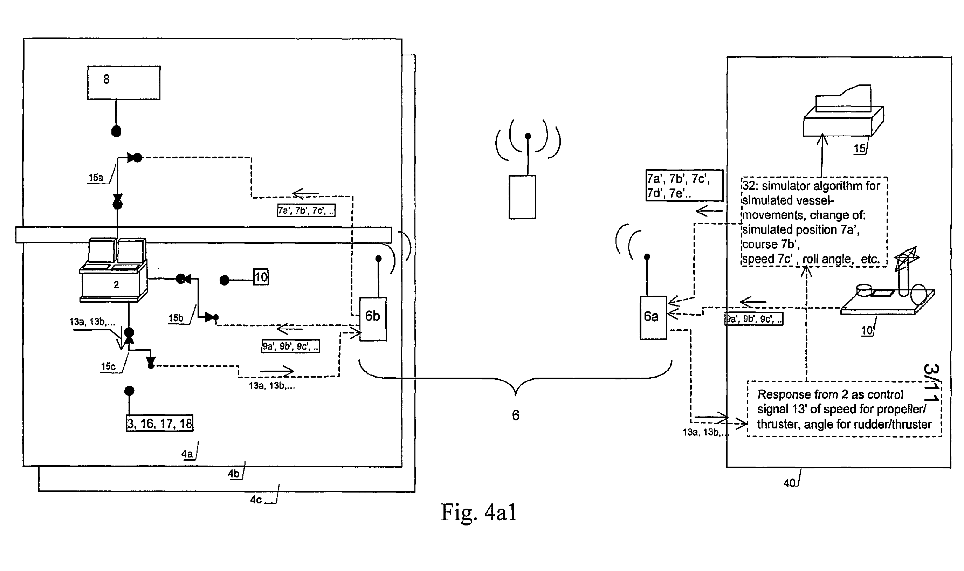

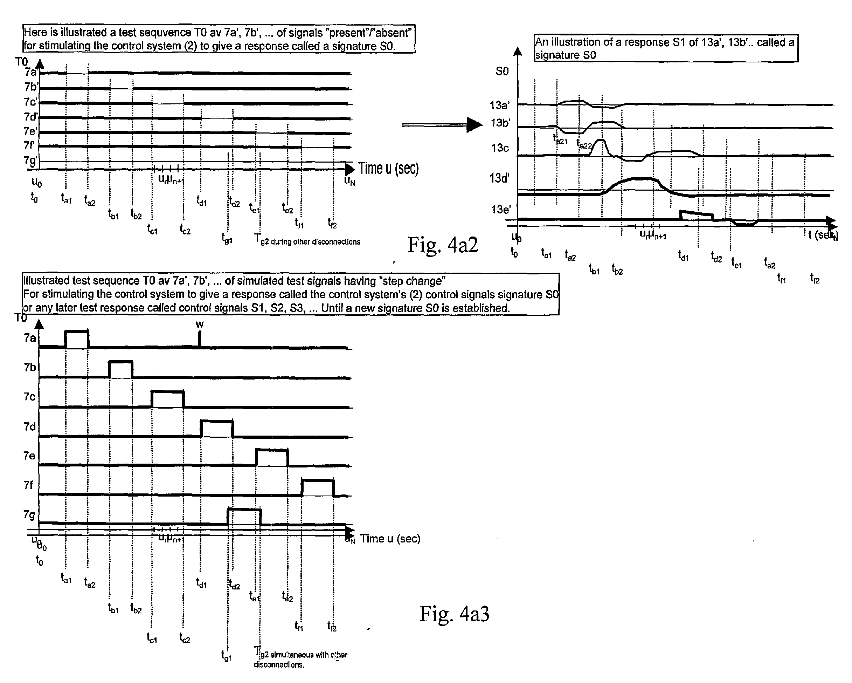

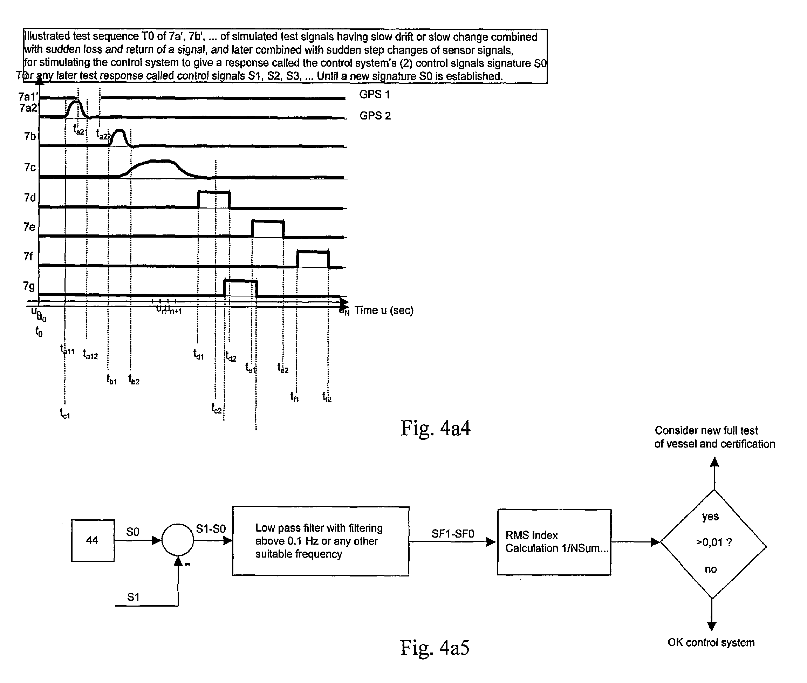

Fig. 4a1illustrates a vessel simulator in a remote simulator location, with a logger where both are connected through a first real-time interface at the simulator location, with one or more communication channels for real-time control, simulation and logging, to one or more real-time interfaces for real-time control, simulation and logging which further is connected to a control system, e.g. a control and monitoring system on at least one vessel. The simulator location can be e.g. at a laboratory in a so-called class society on land, like Det Norske Veritas, American Bureau of Shipping, Germanischer Lloyd, Lloyd's Register, or another class society. Alternatively, the simulator device may be arranged on board the ship to be tested, in order to prevent potential errors due to signal transfer delay, either due to delays in computer communication, or electromagnetic propagation delay due to distance.
Fig. 4a2 illustrates at the left side of the sheet a test sequence T0 of artificial measurements of e.g. position, course, velocity, wind direction etc., and at the right side a resulting response S0 from the control system from this test sequence T0. The artificial measurements of the test sequence T0 are in this illustration simply "signal present" or "signal absent", which is the crudest approximation, although relevant. At the right side of the sheet is illustrated a set S of control system output responses to a test sequence, not necessarily the illustrated test sequence in this figure.
Fig. 4a3 is similar to Fig. 4a2 but illustrates simulated test signals having "step change" which is another possible approximation to possible errors in measurements.
Fig. 4a4 is a more realistic image of possible simulated test signals, showing the above mentioned absent/present signals, step change signals, rapidly changing continuous signals and slow drift signals, and time periods during which several errors occur more or less simultaneously or mutually superposed.
Fig. 4a5 is a model for a comparison and decision process for determining whether the control system's response has changed or not when comparing control signals between the initial test signature and a later control signal acquisition of the control system.
Fig. 4b illustrates a vessel having a control system of which one or more of the real sensor signals are replaced by simulated sensor signals over a communication line to and from a test laboratory, and in which one ore more of the control signals from the control system to the actuators of the vessel are sent back over the communication line to the test laboratory, preferably instead of being sent to the actuators of the vessel.

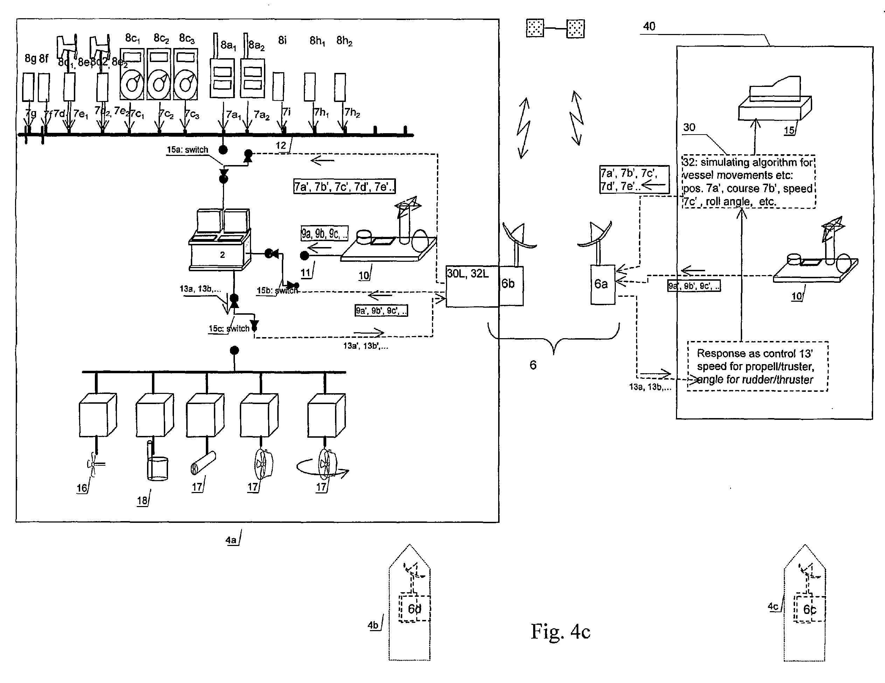

Fig. 4c illustrates a vessel where a set of sensors for pitch, roll, wind speed, wind direction, GPS position sensors, DGPS position sensors, hydroacoustic position sensors, etc., normally arranged to provide measurements to the control system of the vessel, being replaced by simulated measurements from a remote test system via one or more communication lines. The control system responds to the simulated measurements. The response would normally give control signals to the actuators of the vessel, like e.g. propellers, rudders, tunnel thrusters, azimuth thrusters. The response is instead sent via a communication line to a remote test laboratory where a vessel simulator e.g. in the form of an algorithm calculates a the dynamic behaviour of a simulated vessel in response to the control signal from the remote control system in the vessel, and sends the new state of the vessel back to the remote system, for a new response in the form of updated control signals, etc.
Fig. 5 illustrates an overview of a vessel motions in the form of rotational movements as roll (about x), pitch (about y) and yaw (about z), and translational movements like surge (along x), sway (along y) and heave (along z).
Fig. 6 illustrates an overview of the vessel motions in surge, sway and yaw, which are important in connection with dynamic positioning, e.g., in connection with oil drilling without mooring (or in some cases with mooring).
Fig. 7 shows a sketch of a relevant problem for use of the invention where a control system is used to control a drilling platform under dynamic positioning while it is drilling, where the actual position and the desired position of are marked with boldface "x".
Fig. 8 illustrates a timeline for typical points in time testing of a vessel's control system during planning, construction, commissioning, sea trials, and operation of vessel.
Fig. 9 is an illustration of a preferred embodiment of the invention comprising a two-part simulator arrangement. This two-part arrangement comprises a first on-board online simulating computer having custom arranged switches or connectors for connection to ordinary sensor signal lines and command signal lines to the control system on board, with custom arranged switches or connectors to output control signals, with a communication line to a test manager (33) at a remote location laboratory.
Fig. 10 is similar to Fig. 9, being an illustration of a second preferred embodiment of the invention comprising a two-part simulator arrangement. This two-part arrangement comprises an on-board online simulating computer having a control system manufacturer designed interface for connection to the control system on board, and with a communication line to a test manager (33) at a remote location laboratory.

### Description of preferred embodiments of the invention.

### 1.1 Description of the vessel and control system, general.

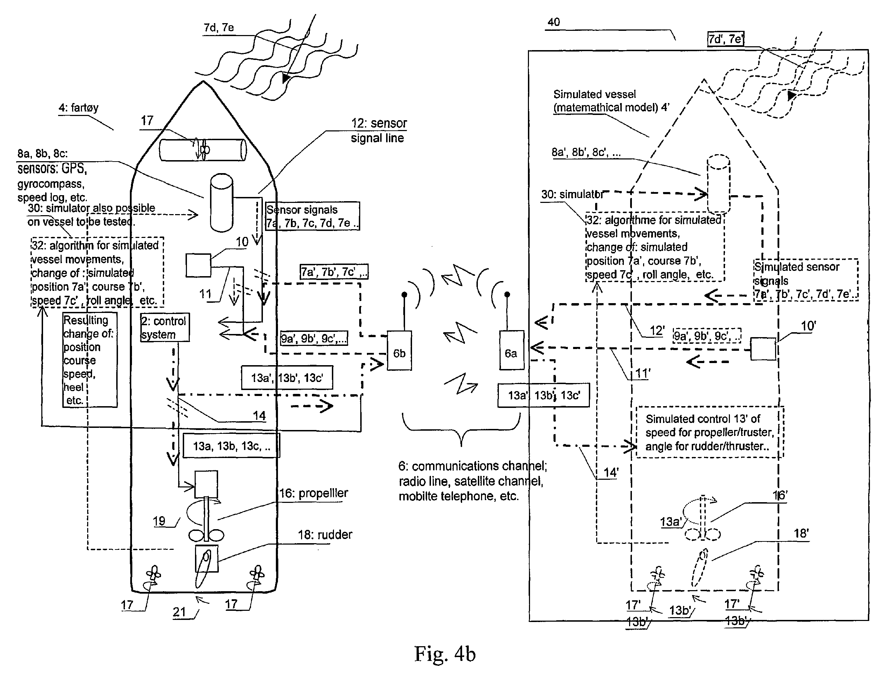

The invention will now be described with reference to some embodiments of the invention illustrated in the drawings enclosed. The invention includes a system for and a method for testing of a control system (2) on a vessel (4), e.g. a ship, a drilling platform, a petroleum production platform, in real time over a communication channel (6), as shown in an overview in Fig. 4a and in more detail in Fig. 4b and 4c. The control system (2) may include control and monitoring of the vessel (4). Testing of the control system (2) may include the simulation of normal states and extreme states and normal changes to such normal and extreme states for the vessel (4), for example ordinary movement in a simulated calm sea state (H1). In addition, one may simulate ordinary movement in a simulated extreme sea state (H2), failure situations with e.g. loss of motor power on a single propeller (16) where the vessel has only this single propeller (16), with subsequent dynamic simulation of rotation away from a desired course (7b) and drift away from a desired position (7a). One may also simulate situations involving the loss of power of one or more propellers (16a, 16b,...) in which the vessel (4) has one or more propellers (16b, 16c, ..) that still functions, and study how the vessel would react to the loss of power of one or more propellers.

Below a brief description is given of the system illustrated in Fig. 4a1, 4b and 4c, for intervention locally on board the ship, or intervention from a remote laboratory (40) to control systems (2) in one or more vessels (4a, 4b, 4c, ..).

The system according to the invention is arranged for the testing a control system (2) in a vessel (4), of which the control system (2) is arranged to control and monitor the vessel (4). The system comprises the following features:
* One or more sensors (8) installed on board the vessel (4) are arranged to send one or more sensor signals (7) over a signal line (12) to the control system (2).
* Command input devices (10) on board the vessel (4) are arranged to send a desired position, course, velocity (9) etc. over a command signal line (11) to the control system (2).

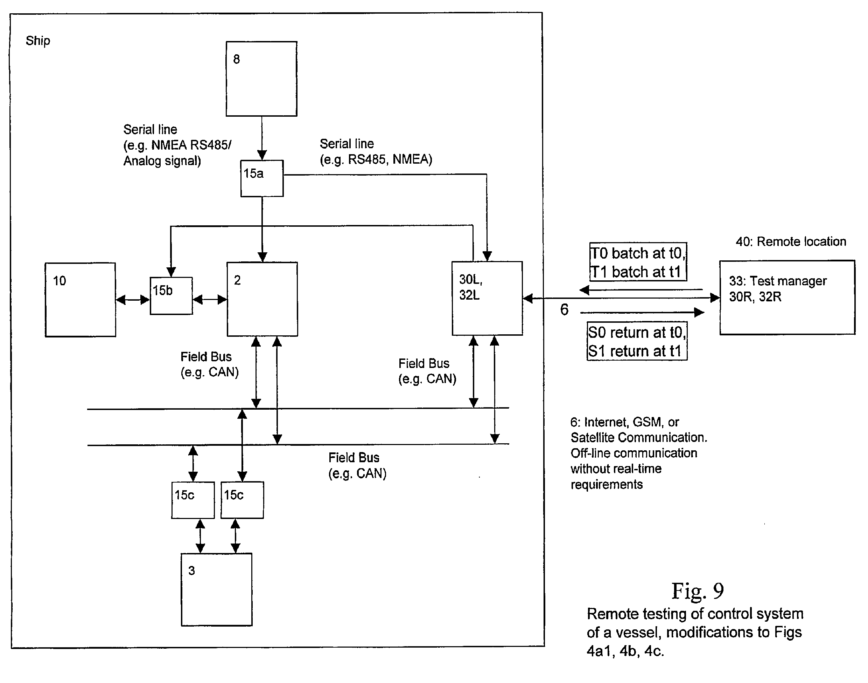

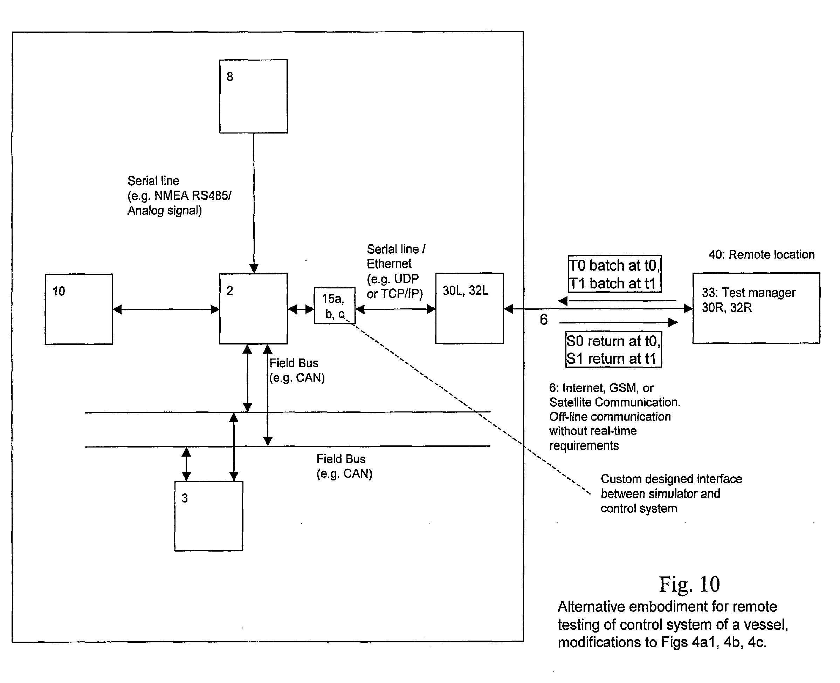

* An algorithm (31) in the control system (2) is arranged for computing control signals (13) to the vessel actuators (3) based on the sensor signals (7) and/or the command signals (9), for sending of the control signals (13) over a signal line to the actuators (3).
* One or more communication lines (6) may be arranged to send one or more simulated sensor signals (7') and/or simulated command signals (9') from a remote test laboratory (40) to the control system (2). The remote laboratory may be on land, and equipment for real-time communication must be available both in the laboratory and on each vessel that is to be tested. In an alternative embodiment of the present invention, the simulated sensor signals (7') and/or simulated command signals (9') may be sent from a device connected locally.
* The remote laboratory may include a simulator (30R) including an algorithm (32) for the simulation of a new dynamic state (50') corresponding to the new sensor signals (7') of a vessel model (4') based on the previous state (50'), control signals (13, 13'), and dynamic parameters (5) for the vessel (4). A similar simulator may also be arranged locally and thus called a local simulator (30L), said local simulator (30L) being connected to said control system (2) on said vessel (4) in order to compensate for synchronizing errors due to time delays incurred during remote testing. Such a local simulator will be described in connection with Fig. 9 and Fig. 10. For one embodiment of the present invention, the so-called "signature" method embodiment, a local simulator may even not be necessary, as acquisition of a signature from the control system may not require feedback in the form of vessel simulation.
* The communication line (6) may be arranged for sending back the new simulated state of the vessel model (4') in the form of sensor signals (7') to the control system (2), for continued computation in the control system (2) on basis of the real and/or simulated sensor data (7,7') or real and/or simulated command signals (9,9'), of control signals (13) to achieve at least one of the real and / or simulated command signals (9,9') in the form of desired position, course, velocity etc.
* The communication line (6) may be arranged for sending of the response of the control system (2) in the form of the control signals (13) as control signals (13') to the remote test laboratory (40), but may also sent the resulting control signals (13') to a local simulator on board the ship.

The control signals (13) include signals (13a, 13b, 13c) in the form of shaft speed (13a, 13b) for one or more propellers (16) or thrusters (17), and rotation angles (13c) for rudders (18) or thruster (17) and possibly other actuators like ballast pumps, or cranes.

The sensors (8) may comprise one ore more devices selected from numerous different devices, of which some are mentioned below:
- position measuring devices (8a), to determine the vessel position (7a), such as GPS receivers (8a), hydroacoustic position sensors (8h), integrating acceleration sensors, etc.;
- course measuring devices (8b), to determine the vessel course (7b), e.g. a gyrocompass or some other compass.
- a speed sensor (8c) or single integrating acceleration sensor to determine the velocity (7c);
- an anemometer (8d, 8e) to indicate the (relative) wind speed (7d) and wind direction (7e);
- a roll angle sensor (8f) to indicate the roll angle (7f);
- a pitch angle sensor (8g) to indicate the pitch angle (7g).

In a preferred embodiment of the invention the system is provided with a switch (15a) arranged to disconnect one or more sensor signals (7) from the signal line (12) to the control system (2). In addition, the system according to the invention can be equipped with a second switch (15b) arranged to disconnect one or more of the command signals (10) from the signal line (11) to the control system (2), and also equipped with a third switch (15c) arranged to disconnect one or more of the control signals (13) from the signal line (14) from the control system. In this way the switches (15) can be used to fully or partially isolate the control system (2) from signals to and from the rest of the vessel. The control system (2) should of course still be connected to the regular electrical power supply on board.

The system implies in the normal manner that the dynamic parameters (5) of the vessel may enter into the algorithm (31) of the control system (2) for the computation of the control signals (13) to the actuators (3).

The system may be arranged so that the remote test laboratory (40) is equipped with a simulator (30R) with an algorithm (32) arranged to simulate the state of a vessel on basis of an initial state represented by completely or partially simulated measurements (7, 7') and control signals (13, 13') from the control system (2), but an equivalent simulator (30L) may be arranged locally on board the ship to prevent communication delay problems.

The communication line (6) may be arranged for sending of one or more simulated sensor signals (7') from the remote test laboratory (40) which is further arranged to be connected to and disconnected from a first real-time interface (6a), on the remote test laboratory (40). Similarly, the communication line (6) is arranged to be connected to, and disconnected from, a second real-time interface (6b) on the vessel (4). The second real-time interface is arranged for being connected through the switch (15a) to the signal line (11) to the control system (2). In a preferred embodiment of the invention, the communication interface (6b) is connected via a local vessel simulator computer (30L) to said switch (15a), as illustrated in Fig. 9, and also in Fig. 4c.

The test system may comprise the use of a remotely arranged simulator computer (30R) in said remote test laboratory (40) for transmitting said simulated sensor signals (7') and said simulated command signals (9') via said communication line (6) to said local simulator (30L) on said vessel, and receiving said control signals (13') from said local simulator computer (30L) via said communication line (6).

The test system may also comprise the use of a remotely arranged test manager (33) in said remote test laboratory (40) for transmitting an initial value of said simulated state (50'), a time sequence of said simulated command signals (9'), and simulated values for sea state, current, wind speed and wind direction via said communication line (6) to said local simulator (30L) on said vessel, and receiving said control signals (13') from said local simulator computer (30L) via said communication line (6), where said local simulator (30L) is connected to said control system (2) so that said control system acquires said simulated sensor signals (9') and said simulated command signals (9') from said local simulator (30L) and outputs said control signals (13') to the local simulator (30L).
A simulated command input device (10') may be arranged remotely for sending of simulated command signals (9') from the remote test laboratory (40) over the real-time interface (6a), and over the communication line (6) and over the real-time interface (6b) to the control system (2). In a preferred embodiment of the invention, a simulated or test command input device (10', 43) may be arranged locally on board the ship for generating and sending of simulated command signals (9') directly to the control system (2). In a preferred embodiment of the invention used for signature response acquisition, simulated command signals (9') may be included in a test series (T0) comprising simulated sensor signals (7') and simulated command signals (9') as explained below. Locally, a local test signal source (41 L) may be arranged at or near the vessel (4) to be tested, for providing said artificial measurements (7') or artificial commands (9') to the control system (2).

A control signal logger (42) is used for recording a response (S0) from the control system (2) upon the given artificial measurement signal sequence (T0). The same control signal logger (42) may also be used for recording a later response (S1, S2, S3, ...) to said given sequence (T0), or, of course, other measurement sequences (T1, T2, T3, ..) being real or artificial. A memory (44) may be connected to the test signal source (41 R/41 L) for storing the test sequence (T0) used for establishing said control system signature response (SO), or/and for storing later test sequences (T1, T2, T3, ..)

The system may be arranged so that all of or parts of the algorithm (31) in the control system (2) can be modified, calibrated, or replaced, locally or over a communication line (6) from a remote test laboratory. According to the invention the ship and / or the test laboratory includes a data logger (15) for logging of the response (13', 19') from the control system (2) to the measurements (7, 7').

### 1.2 Description of a method for testing of the control system.

The system described above may be arranged to be used in a method for testing of a control system (2) in a vessel (4). The control system (2) includes control and monitoring of the vessel (4) with control signals (13) to one or more actuators (3).
The method for testing the control system may comprise the following steps:
- Acquisition in real time of sensor signals (7) to the control system (2) from one or more sensors (8) over a first sensor signal line (12) to the control system (2).
- Acquisition of command signals (9) to the control system (2) from a command input device (10) over a second signal line or command signal line (11) to the control system (2).
- Computation in a control algorithm (31) in the control system (2) on basis of one ore more of the acquired sensor signals (7) and command signals (9), and possibly the dynamic parameters (5) of the vessel, and sending of the control signals (13) over a third signal line (14) to the actuators (3).
- Disconnection of one or more sensor signals (7) from one or more of the sensors (8) or of command signals (9) from the command input devices (10), so that the selected sensor signals (7) or command inputs (9) do not reach the control system (2), and at the same time replacement of one or mo re of the disconnected sensor signals (7) or command signals (9), with corresponding simulated sensor signals (7') or command signals (9') that are generated on a remote test laboratory (40) with respect to the vessel (4). The simulated signals (7', 9') are sent over a communication line (6) through one or more of the signal lines (12, 14) to the control system (2) from the remote test laboratory.
- Computation of the control signals (13, 13') will continue in the usual way in the control system (2) on basis of real and/or simulated sensor signals (7a or 7a', 7b or 7b', 7c or 7c',...) or command signals (9a or 9a', 9b or 9b' , 9c or 9c", ..).
- The control signals (13') that are generated by the control system can then be sent over the communication line (6) to the remote test laboratory (40).

According to a preferred embodiment of the method the method will then include simulation in a remote simulator (30R) in the test laboratory (40) or in a local simulator (30L) by means of an algorithm (32) of a new dynamic state of a vessel model (4') on basis of the control signals (13'). In this way a test on the control system (2) can be performed from the remote test laboratory (40) on a vessel independently of where the vessel is placed in the world. If simulation does not occur locally at or near the ship, the simulation algorithm must take into account the time delay caused by the use of the communication line (6). To avoid time delay errors the remote computer (30R) may transmit the data (7', 9') to be used for a simulation via the communication line (6) to the local simulation computer (30L) at the vessel, as shown in Fig. 9. The remote computer (30R) commands the local computer (30L) to start disconnecting the real sensor and command signals (7, 9) and replace these signals by the artificial sensor and command signals (7', 9') to the control system (2), and to similarly disconnect real output control signals (13) with the test output (13') and store these locally and using the test output (13') online in a simulating algorithm (32) to simulate the dynamic behaviour of the vessel model (4') as described above, as well as transmitting the test output (13') back to the remotely arranged computer (30R) at the remote test laboratory (40). The test output (13') need not be transmitted in an online manner to the remote test laboratory, but may be returned to the remote test laboratory in one or more batches during or after the test has been conducted. The test output (13') may then be recorded and analysed at the remote test laboratory (40).

According to the above method the remote test laboratory (40) that is involved in the testing of the control system can be located on land, and the vessel (4a, 4b, 4c, ...) that is tested is a long distance from the test laboratory, typically between 1 and 20000 km, and where the vessel (4a, 4b, 4c, ..) that is tested may be situated in a nearby harbour, in a distant harbour, in a dock or in a yard, at anchor, or in the open sea.

When the testing of the control system is completed, the communication line between the vessel and the remote laboratory is disconnected, and the regular sensor signals and the regular command signals to the control system are reconnected, and the control signals from the control system are reconnected to the actuators, for normal operation of the control system in the vessel.

According to the preferred embodiment of the invention the sensor signals (7) includes one or more of the following sensor parameter from sensor (8):
- The vessel position (7a) from position sensors (8a), such as GPS-receiver (8a), hydroacoustic position sensors (8h), integrating acceleration sensors, etc.
- course (7b) from course sensors (8b), e.g. a gyrocompass or another compass,
- velocity (7c) from a velocity sensor (8c) or a single-integration acceleration sensor;
- wind speed (7d) and wind direction (7e) from a anemometer (8d, 8e),
- roll angle sensor (7f) from a roll sensor (8f),
- pitch angle sensor (7g) from a pitch sensor (8g).

According to the preferred embodiment of the invention the control signals (13) include signals (13a, 13b, 13c) in the form of shaft speed of one or more propellers (16) or thrusters (17), and angles for rudders (13c) or thrusters (17) and possibly other control devices to achieve one or more of desired position (9a), course (9b), velocity (9c).

The method can be used to calculate control signals to one or more propellers (16a, 16b, 16c, ..), and control devices (18) may include one or more rudders (18a, 18b), and it may include one or more thrusters (17).

The command input device (10) will include one or more of the following items: a position specification device (10a), a steering wheel (10b), a velocity specification device (10c), or a device for specification of desired inclination angle, pitch angle, heave compensation, etc. (10x) that give a command signal (9) of one or more of desired position (9a), desired course (9b), and desired velocity (9c) or another desired state (9x), e.g. desired roll angle, desired pitch angle, desired heave compensation, etc.

According to a preferred embodiment of the invention, the method may include that the remote test laboratory (40) is used to verify that the control system (2) on basis of the simulated sensor signals (7') in the test, and possibly remaining real sensor signals (7), the simulated command signals (9') and possibly remaining real command signals (9) gives control signals (13, 13') that will lead to an acceptable response (S) and resulting in the control system (2) being certified on basis of the test.

The dynamic parameters (5) of the vessel may involve the mass (m), the axial moments of inertia, the mass distribution of the vessel, and the hull parameters that describe the geometry of the hull, as explained below. Disconnection of the sensor signals (7) from the sensors (8) to the control system (2) can be done by means of a switch (15a) on the signal line (12). The disconnection of command signals (9) from the command input devices (10) to the control system (2) can be done by means of a switch (15b) on the signal line (11).

Failure situations could be tested by disconnection of one or more of selected sensor signals (7) or command signals (9) at the time to simulate breakdown of components, and where the response of the control system (2) in the form of control signals (13, 13') and status signals (19, 19') are logged in a logger (15), either locally or in the test laboratory (40). However, such testing would be laborious and difficult to repeat at a later occasion for verification.

Failure situations can also be tested by changing measurements or by generating disturbances in selected sensor signals (7'), or by generating external disturbances like weather, wind, electrical noise, atmospheric noise or acoustic noise to the measurements (7'). Such disturbances may be sent from the remote test laboratory (40) to the control system (2) in the vessel (4), and where the response of the control system (2) in the form of control signals (13, 13') and status signals (19, 19') are logged on a logger (15) in the test laboratory (40).

According to a preferred embodiment of the method according to the invention new software for the control system (2) in the vessel (4) can be transmitted from the test laboratory (40) over the communication line (6).

After the execution of the method according to the invention, in which the test laboratory (40) on basis of the test of the control system (2) and the test results can approve the control system (2), the test laboratory (40) can certify the control system (2) for use in regular operation of the vessel (4).

One of the advantages of the proposed remote testing according to the invention is that one will have a much larger flexibility in the testing of the software and the control system (2) in its entirety under simulated failure situations and under a simulated extensive spectrum of weather loads than what would be the case under conventional testing and certification. At the same time, one avoids the disadvantages and limitations of previously used methods for testing of vessel control systems, namely travel distance, time consuming travels, high cost of travel, time for rigging of equipment for testing, etc. With the proposed invention it is possible to test and certify far more vessels than previously, with a lower number of operators. Moreover, the quality of the testing will be improved as the automatic test execution improves the repeatability of the tests.

### 1.3 Example of testing of a control system on a drilling vessel.

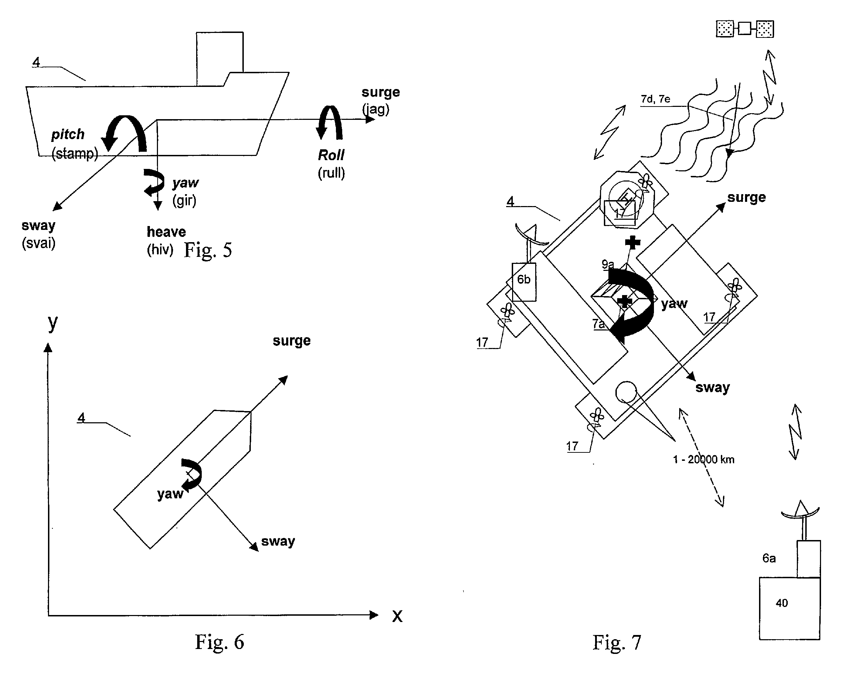

The present invention can be used to test if a control system as mentioned above will indeed function in a safe and reliable way. One may imagine the following example: It is desired to test a control system (2) in a drilling vessel (4) as illustrated in Fig. 7. Drilling is terminated before the test so that potential errors in position under the test with simulated dynamically positioned drilling will not have negative consequences. The drilling vessel (4) includes a control system (2) that corresponds to what is illustrated in Fig. 4a, b and c, and is in the same way connected through a real-time interface (6b) and a communication line (6) and through a real-time interface (6a) to a remote test laboratory (4) as shown in the drawings. The control system (2) comprises control and monitoring of the drilling vessel (4) with propulsion devices (16) like propeller (16a, 16b, 16c, ..) or thrusters (17), and control devices (18) like rudders (18), thrusters (17) in the form of tunnel thrusters and azimuth thrusters. The thrusters (17) can act both as propulsion devices (16) and control devices (18). Under the simulated drilling it is desirable that the drilling vessel (4) is at a stationary position (9a) with a smallest possible position deviation, and with a course (7b) and velocity (7c) that only compensate for the weather in the form of its influence on wind, waves and current. The method for dynamic positioning in agreement with known methods may comprise the following steps that can be executed sequentially:
* The control system (2) acquires in real time the sensor data (7) from one or more sensor parameters, such as the measured vessel position (7a) from position sensors (8a), e.g. DGPS receivers, and course (7b) from course sensors (8b) like gyrocompasses, etc.
* The control system (2) acquires command signals (9) from a command input device (10), for example a so-called joy-stick panel, including at least a position specification device (10a), a wheel (10b), a velocity specificati on device (10c), that give command signals for one or more of desired position (9a) as indicated in Fig. 7, desired course (9b) in the form of angle for rudder or thrusters, and desired speed (9c) in the form of shaft speed for propellers (16) and thrusters (17).
* The sensors (8) transmit the sensor signals (7) over a first sensor signal line (12) to the control system (2).
* The command input device (10) sends the command signals (9) over a second signal line or command signal line (11) to the control system (2).
* The control system (2) then calculates sequentially on basis of one or more of the acquired sensor signals (7a, 7b, 7c, ..) and command signals (9a, 9b, 9c, ..) and possibly a set of required dynamic parameters like mass (m) and axial moments of inertia (M1, M2, ..) for the vessel (4), of the required shaft speed (13a) for propellers (16) and angle (13c) for rudder (18) and possible other control devices to maintain and restore one or more of desired position (9a), course (9b), velocity (9c) etc.
* The control system (2) then sends the control signals (13a, 13b, 13c, ..) including the required shaft speed (13b) from the control system (2) over a third signal line (14) to control the shaft speed (13a) for propellers (16) and /or thrusters (17), and angles (13c) for rudders (18) and/or thrusters (1 7).
* By means of a switch (15a) on the signal line (12), one or more of the sensor signals (7) from one ore more of the senso rs (8) are disconnected from the control system (2), and/or by means of a switch (15b) on the signal line (11) one or more of the command signals (9) from the control input device (10) are disconnected from the control system (2).
* One or more of the disconnected sensor signals (9), e.g. the measured position (7a) or course (7b), or one or more of the disconnected command signals (9), e.g. desired position (9a) or desired course (9b), are replaced with the corresponding simulated sensor signals (7'), e.g. simulated measured position (7a') or simulated measure course (7b'), or simulated corresponding command signals (9'), e.g. simulated desired position (9a') or simulated desired course (9b'), by blinding one or more of the signal lines (12, 14), where the simulated sensor and command signals (7, 9) are generated in a remote test laboratory (40) with respect to the vessel (4) and are sent over a communication line (6) through one or both of the switches (15a, 15b) and into one or more of the signal lines (12, 14). In this case one may blind the sensor signals (7a) from the DGPS receivers (8a) and replace these by a new, wrong and deviating position a given distance away from the position (9a) where the vessel (4) actually is.
* The control system (2) then performs sequential continued computations of the required shaft speed (13b) for propellers (16) and angle (13c) for rudders (18) and other control devices to achieve at least one of desired position, course, velocity, etc. on basis of the input and/or simulated sensor signals (7a or 7a', 7b or 7b', 7c or 7c', ..) and command signals or simulated command signals (9a or 9a', 9b or 9b', 9c or 9c', ..) and the required vessel parameters (5). The computed response, the so-called control signals (13) from the control system (2) to the actuator (3), like for example the control signal (13a) for the control of propellers (16) and the angle (13c) of rudders (18), can be disconnected or blinded by means of a third switch (15c) so that the control signals (13) do not control the propellers (16) or the rudders (18) during the test, but are instead sent over the communication line (6) to the remote laboratory (40).

The control system (2) may then be regarded as a "black box" (2) where a change is simulated in at least one of the sensor signals (7) to the "black box" (2), and where the "black box" (2) responds with a control signal (13). In the case of the drilling vessel (4) mentioned in the introduction, where there was an error in the DGPS signals, one would experience after 5 minutes that the control system (2) would suddenly attempt to control the propellers, thrusters and rudders of the vessel (4) in order to move the vessel to a new position that the control system would suddenly regard as correct because it had been given as stable and wrong for 5 minutes.

### 1.4 The motion of a vessel and the simulation of this motion.

The motion of a vessel (4) is described in terms of the velocity of the ship in surge, sway and yaw, by the position of the centre of mass, and by angles in roll, pitch and yaw, see Fig. 5. The set of variables (velocities, positions, angles of rotation, etc.) that uniquely describe the motion of the vessel is said to be the state (50) of the vessel. A vessel will be exposed to forces and moments that influence the motion of the vessel. These forces and moments are due to excitation from wind, current and waves, from the use of actuators (3) like propellers (16), thrusters (17) and rudders (18), from hydrostatic forces that correspond to spring force action due to angles in roll and pitch and position in heave, and from hydrodynamic forces that are related to the velocity and acceleration of the vessel (4). Forces and moments that act on a vessel (4) depend on the vessel motion as given by the state (50), whereas the motion of the vessel can be seen as a consequence of the forces and moments that act on the vessel. For a vessel or ship the geometry of the hull, the mass and the mass distribution will be known. In addition estimates of the hydrodynamic parameters of the ship will be known. When the motion of the vessel is given in terms of the state (50), then forces and moments that act on the ship can be calculated in a simulator (30), for example by use of an algorithm (32). In the simulator (32) the simulated state (50') of a simulated vessel (4') is calculated in a procedure given in the following. The acceleration and angular acceleration of the simulated vessel (4') may then be calculated from the equations of motion for the vessel, which are found from Newton's and Euler's laws. Such equations of motion are described in textbooks. In the equations of motion the following parameters appear:
- The vessel mass,
- the position of the centre of mass,
- the position of the centre of buoyancy,
- the moments of inertia of the vessel;
- the hull geometry, including length , beam and draft;
- hydrodynamic added mass,
- hydrodynamic potential damping,
- viscous damping,
- parameters related to restoring forces and moments on the hull due to motion in heave, pitch and roll,
- parameters relating the amplitude, frequency and direction of wave components to the resulting forces and moments on the hull.
- Moreover, the equations of motion include mathematical models for actuator forces from propellers (16) as a function of the propeller speed and pitch, forces from rudders (18) as a function of the rudder angle and the vessel speed, and forces from thrusters (17) as a function of the thruster speed and direction.

The following procedure can be used to compute the motion of a vessel (4, 4') as given by the state (50, 50') over a time interval from u₀ to u_{N}: Suppose that the motion of the vessel is given in terms of the state (50') at the initial time instant u₀, and the fo rces and moments are calculated at this time instant. The acceleration and angular accelerations of the vessel at time u₀ can then be computed from the equations of motion for the vessel (4, 4'). Then numerical integration algorithms can be used to calculate the motion of the vessel as given by the state (50, 50') at time u₁= u₀+h, where h is the time step of the integration algorithm. For a vessel the time step h will typically be in the range 0.1 - 1 s. When the motion (50, 50') of the vessel (4, 4') at time u₁ is computed, the forces and moments at time u₁ can be computed, and the acceleration and angular acceleration at u₁ are found from the equations of motion. Again, using numerical integration the motion (50, 50') of the vessel at time u₂= u₁+h is computed. This procedure can be repeated at each time instant uₖ= u₀+h*k until time u_{N} is reached.

The waves that act on a vessel are described as a sum of wave components where one wave compoment is a sinusoidal long-crested wave with a given frequency, amplitude and direction. For a given location at sea the prevalent distribution of amplitude and frequency of the wave components will be given by known wave spectra like the JONSWAP or ITTC spectra, where the intensity of the wave spectrum is parameterised in terms of the significant wave height. The resulting forces and moments acting on the vessel will be a function of the amplitude, frequency and direction of the waves, and of the velocity and course of the vessel. Forces and moments from wind will be given by wind speed, wind direction, vessel velocity and the projected area of the ship above the sea surface as a function of the vessel course relative to the wind direction. Forces and moments from current will be given by the current speed, current direction, the projected area of the hull under the sea surface, and by the vessel velocity and course relative to the current direction.

### 1-5 Dynamic positioning - DP:

In dynamic positioning, so-called DP, the vessel (4) is controlled in three degrees of freedom (DOF). The desired position in x and y and in course are given as inputs from an operator using keyboard, roller ball, mouse or joystick on a control panel (10). A control system (2) is used to compute the required actuator forces in the surge and sway directions, and the actuator moment about the yaw axis so that the vessel achieves the desired position and course. The control system (2) also includes actuator allocation, which involves the computation of propeller forces, rudder forces and thruster forces corresponding to the commanded actuator forces and moments. The control system (2) is implemented through the running of an algorithm (31) on a computer on board the vessel (4). This algorithm (31) compares the desired position (9a) and course (9b) with the measured position and course (7a, 7b), and of basis of this the algorithm computes the required actuator forces and moments using control theory and found in textbooks. In addition the algorithm includes an allocation module where propeller forces, rudder forces and thruster forces are computed. The position and course are measured by DGPS sensors, gyrocompasses, hydro-acoustic sensor systems where transponders are laced on the sea floor, and taut-wires where the inclination of a taut wire fixed on the sea-floor is measured.

### 1-6 Testing of a vessel's control system.

Different failures of marine control systems, e.g. DP systems have been recorded together with the conditions that lead to the specific failure situations. As an example of this a sudden and stable error of 75 m on the GPS receivers has lead to serious failure situations in the form of a so-called drive-off for a drilling vessel under DP control where the vessel suddenly left the desired position, and emergency actions like disconnection of the riser and cutting of the drill string had to be executed. Another example is the sudden loss of an acceleration measurement signal in heave compensation, in which case the system cannot give an accurate compensation of the heave motion of the vessel and potentially difficult situations can occur if the load is in the wave zone or close to the sea floor during installation of the load at a specific place at the seafloor, or in heave compensation of a drilling riser with a rotating drilling string arranged between the vessel and a well through the seafloor.

Consider a situation in the combined form of a vessel's location, speed or course, actual weather, actual sea state, a sequence of errors in one or more sensor signals, and a sequence in command input signals that has previously resulted in a recorded failure situation. Such a situation may be reproduced for testing purposes to see if the control system to be tested is capable of handling the situation with out ending in a control system failure.

A proposed approach according to an embodiment of the invention is to test a control system (2) for a given vessel by running the control system with inputs in the form of simulated sensor signals (7a', 7b', ..) and simulated command input signals (9a', 9b' ..), and in which the outputs of the control system (2) in the form of control signals (13a, 13b, ..) are used as control signals to the simulated vessel model (30). A test scenario for the control system is generated in the form of a sequence of test cases that are to be tested for the given vessel. Each test case is given by a specified sea state, specified wind speed (7d') and wind direction (7d'), specified water current speed (7k) and current direction (7l), and a predetermined sequence of command input signals (9a', 9b', 9c', ..). In addition, each test case may involve a sequence of predetermined errors that are added to the simulated sensor signals (7a', 7b', 7c', ..), e.g. an additional step change of 75 m in one or more DGPS receivers (see Fig. 4a3) or so-called wild-points (w) where a position signal has an additional error that suddenly varies from zero to 50 m and then immediately to zero, an error in the form of steady drift of 1 m/s in one or more GPS receivers, errors in the form of rapid fluctuations of 2 m in one or more position sensors like DGPS receivers (8a) or hydroacoustic position sensors, (see Fig. 4a4), or the loss of one or more sensor signals (see Fig. 4a2). Known conditions for previously recorded failure situations may be used to specify such test cases.

For each test case in the sequence of the test the input sensor signals, the input command signals and the resulting control signals are logged, and based on analysis of the logged test data it is decided if the control system performed satisfactorily in the test, and on basis of this the control system may be approved or not approved, and possibly certified on basis of this.

### 2-1 Acquisition of a signature of a control system

### Introduction.

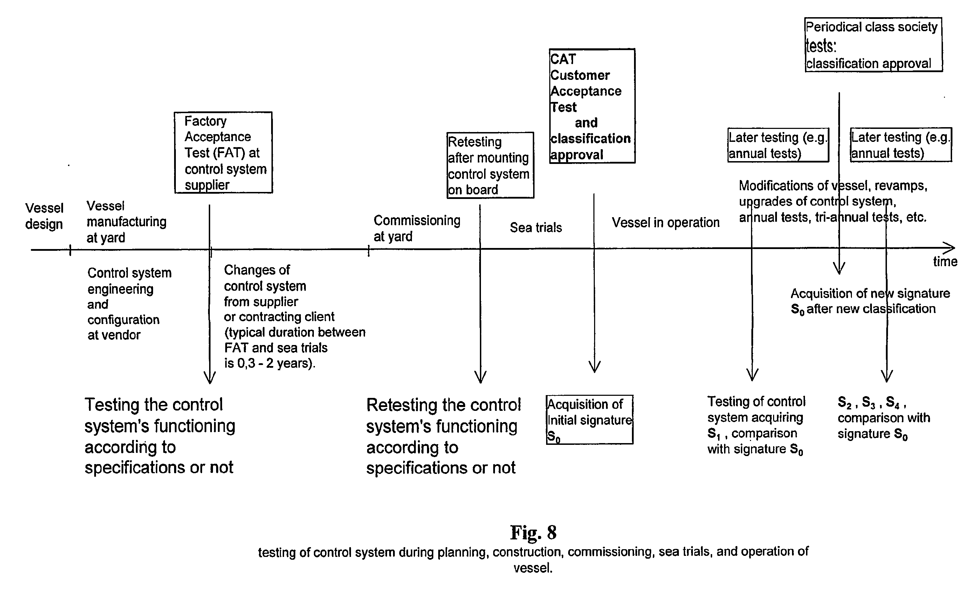

Consider a control system (2) that has been tested and approved and certified by a classification company, e.g. Det Norske Veritas. This testing and certification may take place at several points of time, please refer to Fig. 8:
* The control system may be certified early after a test involving the connection of the control system (2) to a simulator, at the time of Factory Acceptance Testing (FAT) at the control system manufacturing site.
* Later, the control system may be retested during near-final configuration at the time of commissioning of the vessel at the yard site.
* The control system may be tested according to an embodiment of the invention while being approved and certified immediately after the time of Customer Acceptance Testing (CAT) when the vessel is set into operation.
* Annual or tri-annual tests may be a standard requirement by a classification company or insurance companies.
* Testing according to the invention may be required to check continued control system health after reprogramming of parts of or the entire of the control system, replacement or repair of sensors, installation of new sensors, change or repair of command consoles etc. relating directly to the control system input. After such modifications an approval or certification of the control system established before the modifications should no longer be valid.
* Revamp modifications of the vessel, e.g. mounting of larger or new cranes, changing or extending the hull, changing of drilling derrick or heave compensation system for drilling or production risers, etc. may comprise a reconfiguration of the control system and should lead to a test of the control system for re-certification.

### 2-2 Establishing a control system signature, general.

To establish whether possible modifications actually have been made to a control system (2) after approval or certification, it is proposed to establish a control system output reference "signature" S0 after the testing is completed and the ship is approved, and store said signature S0 for comparison with later tests of the system. The method will be described in detail below.

A signature S0 is established according to a preferred embodiment of the invention by generating a preferably predetermined sequence T0 of one or more artificial sensor signals (7a', 7b', ..) and input command signals (9a', 9b', ...) for use as inputs to the control system (2) instead of the real sensor signals (7a, 7b, 7c, ..) and real input command signals (9a, 9b, 9c, ..), and recording the resulting output from the control system (2) as a signature (S0) in the form of control signals (13a, 13b, 13c, ..), that in this case preferably may not be sent to the actuators (17, 18, 19). In a preferred embodiment, this original signature (S0) is then a complete time section history of the control signals.

### Later tests.

To test whether a control system (2) has been modified, the same input sequence T0 is input to the control system (2) at some later times (t1, t2, t3, ...), and resulting output in the form of control signals (13a, 13b, 13c, ..) are recorded as new system responses or "signatures" (S1, S2, S3, ..). For determining whether said control system (2) has changed or been modified, a comparison must be made between the original signature (S0) and the new signatures (S1, S2, S3, ..).

### 2-3 Establishing a control system signature, detailed.

In more detail, a preferred embodiment of the invention comprises a method for verifying a control system (2) of a vessel (4). The control system (2) in its operative state is arranged for receiving sensor signals (7) from sensors (8) and command signals (9) from one or more command input devices (10). The control system (2), as a response to said measurements (7) and command signals (9), provides control signals (13) to the actuators (3) of said vessel in order to maintain a desired position, velocity, course or other state of said vessel (4). The method is characterised by the following steps:
* During a first time (t0), reception of one or more real sensor signals (7a, 7b, 7c, ..) to said control system (2) is disconnected, and replaced by a first test sequen ce (T0) comprising one or more artificial measurements (7a', 7b', 7c', ..) from a test signal source (41) to said control system (2).
* The control system (2) is then left to work based on said real and / or artificial sensor signals (7, 7') to generate control signals (13') to be recorded as said control system's (2) control signals (13) as a response (S0) to said first test sequence (T0) for said first time (t0) on a control signal logger (42).
* The control system's (2) response (S0) to said first test sequence (T0) is then stored at said first time (t0) as the "signature" response (S0) of said control system (2);

The method has the purpose of, at a later time (t1, t2, t3, ..), using the same given test seq uence (T0) input to said control system (2), and recording a later response (S1, S2, S3, ..) from said control system (2), and determining whether said later response (S1, S2, S3, ..) is generally similar to said signature response (S0) to verify that said control system (2) is unchanged, or whether said later response (S1, S2, S3, ..) is significantly different from said signature response (S0) to indicate that said control system (2) has been changed.

### 2-4 Comparison with "signature" S0.

The later acquired system response S1 is, according to the invention, compared to the original system response or "signature" S0. If there is little difference between S0 and S1, then the systems is considered to be unchanged, and there is no need for a new test for renewed approval or certification. If there is a significant difference between S0 and S1, then it is concluded that the control system has been modified, the approval or certification is no longer valid, and a new approval / certification test should be conducted. To determine what is a significant difference one must consider several limitations realistically: The signatures S0 and S1, and later system responses, may contain some noise and high frequency components, as will the test sequence T0, so acquired system responses will never be exactly equal. Below follows an outline of a method to compute the difference.

### 2-5 Computing a difference.

The following computation method may in a preferred embodiment of the invention be used to determine the difference between said control system's original response (S0) recorded at time t₀, and a later response (S1) recorded at t₁, which may be on the order of week, months or years after to. The control signals are recorded at time instants u₁, u₂, ..uₙ..., u_{N}, with intervals in the order of seconds during the test initiated at time to to establish the original response S0, or during the test initiated at time t₁ to establish the response S1. For each time instant u₁, u₂, ..uₙ..., u_{N}, the control system will output several control signal comprising control channel signals like (13a, 13b, 13c, ....13K), which we may call a multidimensional signal. The multidimensional values of the sequence S0 at time uₙ is denoted $S ⁢ 0 \left({u}_{n , 1}, {u}_{n , 2}, {u}_{n , 3}, {u}_{n , 4}, .., {u}_{n , m}, .., {u}_{n , K}\right) ,$
in which the first subscript n in uₙ is one time instant, and the second subscript 1, 2, 3, 4, ...m, .. ,K indicate control channel signals like (13a, 13b, 13c, .., 13m, .. ,13K). In the same way the multidimensional values of S1 at the time instant uₙ is $S ⁢ 1 \left({u}_{n , 1}, {u}_{n , 2}, {u}_{n , 3}, {u}_{n , 4}, .., {u}_{n , m}, .., {u}_{n , K}\right) .$
To remove high frequency components of the sequences S0 and S1 that can have a random nature, the sequences S0 and S1 are low pass filtered. The filtered version of S0 is called SF0 , at a time uₙ denoted $S ⁢ 0 \left({u}_{n , 1}, {u}_{n , 2}, {u}_{n , 3}, {u}_{n , 4}, .., {u}_{n , m}, .., {u}_{n , K}\right) ,$
and the filtered version of S1 is called SF1 at the time uₙ denoted $S ⁢ F ⁢ 1 \left({u}_{n , 1}, {u}_{n , 2}, {u}_{n , 3}, {u}_{n , 4}, .., {u}_{n , m}, .., {u}_{n , K}\right) .$
The difference between S0 and S1 is then characterized in terms of RMS value for the difference between SF0 and SF1. This may be computed as follows: $RMS \left(SF⁢0,SF⁢1\right) = square root of \left\{\left[SF⁢1\left(\left({u}_{1}\right)\right)-SF⁢0\left(\left({u}_{1}\right)\right)\right]⁢2+\left[SF⁢1\left(\left({u}_{2}\right)\right)-SF⁢0\left(\left({u}_{2}\right)\right)\right]⁢2+…+\left[SF⁢1\left(\left({u}_{N}\right)\right)-SF⁢0\left(\left({u}_{N}\right)\right)\right]⁢2\right\}$
in which consideration must be taken that each of the measurements SF0((u₁)) and SF1((u₁)) generally are multidimensional as described above.

Differences between S0 and S1 control signal parameters like engine power command output, rudder angle command output, thru ster angle command output, and so on, should be given weights accordi ng to their actual nature.

The RMS can be viewed as a weighted mean value of the difference between the two sequences SF0 and SF1. If the RMS(S0, S1) is larger than some threshold value, e.g. 0.01 or 1 %, then there may be a significant probability that the control system has been modified or altered, and a new test should be conducted for approval or certification. Else, if RMS(S0, S1) is less than the threshold value, then the system is considered to be unchanged, and the approval and / or certification may be considered to be valid. To further improve the quality of the comparison, the alarm and event lists associated with S0 and S1 may be analysed qualitatively.

### 3-1 Establishing signatures for individual parts of the control system

The method described above for the generation of a signature can be used to generate a signature for an entire control system, or expanded to a set of integrated control systems. An alternative approach is to generate a set of signatures where each signature is related to the performance of the control system in relation to a specific set of sen sors or to a specific function of the control system. The procedure is then to generate a predetermined sequence TG10 of artificial sensor signals (7a', 7b', 7c' ..) from sensor group 1 of one or more sensors and recording the resulting output as a signature SG10 in the form of control signals (13a, 13b, 13c, ..), where the signature SG10 related to sensor group G1. Then it is generated a predetermined sequence TG20 of artificial sensor signals from sensor group 2, and the resulting outputs are recorded as a signature SG20 related to sensor group 2. Proceeding in this way, the sequential input of the input sequences (TG10, TG20, TG30, .. ) and recoding of the corresponding outputs will establish signatures (S10, S20, S30, ....) for the sensor groups G1, G2, G3,... that have been defined. Sensor group G1 may be GPS receivers, sensor group G2 may be the hydroacoustic position sensors, sensor group G3 may be a combination of GPS and hydroacoustic sensors, etc.

In addition, a set of input sequences TC10, TC20, TC30, .... of artificial command input signals (9a', 9b', ...) are generated to test the system with respect to different combinations C1, C2, C3 ... of command input signals. The resulting outputs are recorded as the signatures SC10, SC20, SC30, .... in the form of control signals (13a, 13b, 13c, ..), where the signatures SC10, SC20, SC30, .... are related to the combinations C1, C2, C3 ... of command input signals.

Then as described above in the case of a single signature for the entire system, the control system can be tested at a later times (t1, t2, t3, ...). In the test numbered n there will be input sequences TG1n, TG2n, TG3n, .... and TC1n, TC2n, TC3n, .... leading to responses SG1n, SG2n, SG3n,.... and SC1n, SC2n, SC3n, ..... Then by comparing SG1n, SG2n, SG3n, .... and SC1n, SC2n, SC3n, .... with the signatures SG10, SG20, SG30, .... and SC10, SC20, SC30, .... and noting which responses that differ from the original signatures it is possible to determine which sensor group, or which combination of input signals, that lead to a change in signature. If it is computed as explained above that SG1n differs from SG10, then the control system has been altered, and the change in the control system is related to sensor group G1, etc. If it is computed as explained above that SC1 n differs from SC10, then the control system has been altered, and the change in the control system is related to the combination C1 in input command signal, etc.

### Components list:

1: -
2: Control system (2)
3: Actuators (propeller 16, thruster 17, rudder 18)
4: Vessel, ship, drilling vessel, drilling platform, production platform, or other sea-going vessel.
4': Simulated vessel, vessel model in a local or remote simulator (30R or 30L) generally comprising a simulator algorithm (32).
5: The dynamic parameters of the vessel. 5a: mass m, 5b: 5c: position of centre of mass, 5c, 5d, 5e moments of inertia about the vessel axes, mass distribution, hull parameters, etc.
6: Communication line, including a first real-time interface (6a) in the remote test laboratory (40), and a second real-time interface (6b) on a first vessel 4a, (6c) on a second vessel (4b), etc.
7: Sensor signals from sensors (8): 7a: position, 7b: course, 7c: velocity, 7d: wind speed (relative), 7e: wind direction (relative), 7f: pitch angle, 7g, roll angle, 7h: hydroacoustic (relative) position with respect to transponders on the seafloor, 7i, GPS/inertial position and course (7j), current speed (7k) and current direction (71)
7': Simulated sensor signals for simulated vessel (4'), predetermined, or calculated in a local or remote simulator (30R or 30L) generally comprising a simulator algorithm (32).
8: Sensors: 8a: position sensor; 8b: (gyro)-compass, 8c: velocity sensor, 8d: wind speed sensor, 8e: wind direction sensor, 8f: pitch sensor, 8g, roll sensor, 8h: hydroacoustic position sensor, 8i: "Seapath 200" GPS/inertial sensor of position and course (8j).
9: Command signals from command input device (10): 9a: desired position, 9b: desired course, 9c: desired velocity, etc.
9': Simulated command signals.
10: Command input device: Position specification device 10a to specify desired position 9a, wheel 10b to specify desired course 9b, velocity specification device 10c to specify desired velocity, etc.
11: One or more command signal lines or a communication bus for command signals (9) to the control system (2).
12: One or more sensor signal lines or a communication bus for sensor signals (7) to the control system (2).
13: Control signals including shaft speed (13a, 13b) for pro peller (16) and thruster (17) and angle (13c) for rudder (18) or thruster (17),
13' Control signals that are sent to the remote test laboratory (40) 14: One or more third signal lines (14) or communication bus from the control system (2) to the actuators (3) (16, 17, 18)
15: Data logger
15a, 15b, 15c: Switches for disconnecting sensor signals (7), command signals (9) from entering control system (2) and disconnecting output control signals (13) from said control system (2), and for connecting artificial sensor signals (7'), artificial command signals (9') and output control signals (13') to and from local simulator (32L) or directly or indirectly via a communication line (6) from a remote test laboratory (40).
16: Propeller (16)
17: Thruster (17),
18: Rudder (18): (together "actuators" (3).
19: Status signals
30: A computer with a vessel simulator, either a vessel sim ulator (30R) arranged in a remote test laboratory (40), or a vessel simulator (30L) arranged locally.
30R: A computer with a vessel simulator (30R) arranged in a remote test laboratory (40).
30L: A computer with a vessel simulator (30L) arranged locally on the ship or vessel (4) to be tested.
31: Control algorithm (31) for the computation of control signals (13) to the vessel actuators (16, 17, 18) on basis of sensor signals (7), command signals (9) and the dynamic parameters (5) of the vesse I (4), for sending of control signals (13) over a signal line (14) to the actuators (3), for example propellers (16), thrusters (17) or rudders (18).
32: Algorithm in said vessel simulator computer (30) for the computation of the dynamic motion of the vessel as given by a sim ulated state (50') corresponding to the sensor signals (7') on basis of vessel parameters (5), simulated wind speed and wind direction, simulated wave elevation and wave direction, simulated current speed and current direction, etc, and the forces of the actuators (3) on the vessel (4).
33. A computer with a test manager algorithm (34)
34. Test manager algorithm that outputs a test description in batch form to the vessel simulator (30L/30R) and that inputs the resulting control signals from the control system (2) in batch form.
40: A remote test laboratory
41 R: A remote test signal source (41 R) arranged in said remote test laboratory (40) for providing artificial measurements (7a', 7b', 7c', ..) to said control system (2).
41 L: A local test signal source (41 L) arranged at or near a vessel (4) to be tested, for providing artificial measurements (7a', 7b', 7c', ..) to said control system (2).
42: A control signal logger (42) recording a response (S0) from said control system (2) to said given artificial measurement signal sequence (T0), or a later response (S1, S2, S3, ...) to said given sequence (T0) (or other given or naturally occurring or random measurement sequences (T1, T2, T3, ..).
43: A test command device (43) for generating artificial command signals (9a', 9b', 9c', 9d', ....)
44: A memory (44) connected to said test signal source (41 R/41 L) for storing said test sequence (T0) used for establishing said control system signature response (SO), or/and for storing later test sequences (T1, T2, T3, ..).
50. A state (50) of the vessel (4) comprising one or more variables like velocity in surge, sway and yaw, angular velocity in roll pitch and yaw, position in x, y and z, angles in roll, pitch and yaw, state variables of actuators like shaft speed of propellers and angles of rudders etc., so that the state (50) at a given time instant uniquely defines the motion of the vessel and the actuators at said time instant, and where the state (50) corresponds to the sensor signals (9), and where the sensor signals (9) typically include values for a subset of said state (50).
50'. A simulated state (50') of the simulated vessel (4') calculated by said simulator (30), where said simulated state (50') includes simulated values of the variables of the state (50), and where the state (50') corresponds to the simulated sensor signals (9').
T0: A first test sequence of artificial measurements (7a', 7b', 7c', 7d', ..).
S0: A first command system response comprising command signals (13a, 13b, 13c, ...)

## Claims

1. A method for verifying a control system (2) of a marine surface vessel (4), in which said control system (2) in its operative state is arranged for receiving sensor signals (7) from sensors (8) and command signals (9) from one or more command input devices (10), and in which said control system (2) as a response to said measurements (7) and command signals (9), provides control signals (13) to said vessel's actuators (3) in order to maintain a desired position, velocity, course or other state variable of said vessel (4);
said method **characterized by** the following steps:
* during a first time (t0), disconnecting the reception of one or more real sensor signals (7a, 7b, 7c, ..) to said control system (2) and replacing said one or more of said real sensor signals by a first test sequence (T0) comprising one or more artificial measurements (7a', 7b', 7c', ..) from a test signal source (41) to said control system (2);
* letting said control system (2) work based on said real and / or artificial sensor signals (7, 7') to generate control signals (13') to be recorded as said control system's (2) control signals (13) as a response (S0) to said first test sequence (T0) for said first time (t0) on a control signal logger (42);
* storing said control system's (2) response (S0) to said first test sequence (T0) at said first time (t0) as said control system's (2) "signature" response (SO);
said method having the purpose of, at a later time (t1, t2, t3, ..), using the same given test sequence (T0) input to said control system (2), and recording a later response (S1, S2, S3, ..) from said control system (2), and determining whether said later response (S1, S2, S3, ..) is generally similar to said signature response (S0) to verify that said control system (2) is unchanged, or whether said later response (S1, S2, S3, ..) is significantly different from said signature response (S0) to indicate that said control system (2) has been changed.

2. The method of claim 1, said replacement of one or more sensor signals (7a, 7b, 7c, ..) by artificial sensor signals (7a', 7b', 7c', ..) comprising one or more signal situations:
* a mere absence or presence of one or more artificial sensor signals (7a', 7b', 7c', ..);
* a step change of one or more artificial sensor signals (7a', 7b', 7c', ..) within a realistic range;
* a slow drift or change of one or more artificial signals (7a', 7b', 7c', ..) within realistic signal range of the corresponding real signal (7a, 7b, 7c, ..)
* noise, "white"; or
* superposition of noise on real measurement signals (7) or on artificial measurement signals (7').

3. The method of claim 1, in which said test sequence (T0) comprises one or more recorded real measurement signals (7a or 7a', 7b or 7b', 7c or 7c', 7d or 7d',...).

4. The method of claim 1, in which said test sequence (T0) is stored in a memory (44) connected to said test signal source (41).

5. The method of claim 1, in which said sequence of sensor signals (7') comprises predetermined sensor signals (7').

6. The method of claim 1, said method for testing a control system (2) for dynamic positioning of the vessel (4) for keeping a given desired position (7a) within a given radius from said position (7a), for said vessel.

7. The method of claim 1, said method for testing a control system (2) for a vessel (4) arranged for ordinary sailing at sea, e.g. a passenger ship, a ferry, a cargo transport ship, a tanker, or the like, running between different destinations or from waypoint to waypoint.

8. The method of claim 1, comprising transmitting said test signal sequence (T0) of artificial measurements (7a', 7b', 7c', 7d', ...) to said control system (2) via a communication line (6) from a remote test laboratory (40).

9. The method of claim 1 or 8, comprising the transmission of said control signal sequence (S0, S1, S2) from said control system (2) via a communication line (6) to a test laboratory (40).

10. The method of claim 8 or 9, comprising the use of a remotely arranged simulator computer (30R) in said remote test laboratory (40) for transmitting said simulated sensor signals (7') and said simulated command signals (9') via said communication line (6) to said local simulator computer (30L) on said vessel, and receiving said control signals (13') from said local simulator computer (30L) via said communication line (6);

11. The method of claim 8 or 9, in which a remotely arranged test manager (33) in said remote test laboratory (40) is arranged for transmitting an initial value of said simulated state (50'), a time sequence of said simulated command signals (9'), and simulated values for sea state, current, wind speed and wind direction via said communication line (6) to said local simulator (30L) on said vessel, and receiving said control signals (13') from said local simulator computer (30L) via said communication line (6), where said local simulator (30L) is connected to said control system (2) so that said control system acquires said simulated sensor signals (9') and said simulated command signals (9') from said local simulator (30L) and outputs said control signals (13') to the local simulator (30L).

12. The method of claim 1, in which said test sequence (T0) comprises artificial measurement signals (7a', 7b', 7c', 7d', ...) provided to said control system (2), said artificial measurement signals having the same nature as real measurement signals, e.g. providing a similar signal voltage range, signal current range, a similar logical or boolean range, a similar digital range and format.

13. The method of claim 1, one or more of said artificial measurement signals (7a', 7b', 7c', 7d', ...) being artificial measurements superposed on said real measurement signal (7a, 7b, 7c, 7d, ..).

14. The method of claim 1, one or more of said artificial measurement signals (7a', 7b', 7c', 7d', ...) being noise superposed on said real measurement signal (7a, 7b, 7c, 7d, ..).

15. The method of claim 1, in which said artificial measurement signals (7a', 7b', 7c', 7d', ...) provided to said control system (2) have a predetermined amplitude variation with time, said amplitude variation having a desired range.

16. The method of claim 1, further comprising the following steps:
* in addition to disconnecting reception of sensor signals (7), disconnecting the reception of one or more command signals (9a, 9b, 9c, ..) from said command input device (10) to said control system (2) and replacing said one or more command signals (9a, 9b, 9c, ..) by one or more artificial command signals (9a', 9b', 9c', ..) generated by a test command device (43) to be included in said test sequence (T0) provided to said control system (2);
* letting said control system (2) work based on said real and / or artificial (or omitted) sensor signals (7, 7') and / or said artificial command signals (9a', 9b', 9c', ..) to generate control signals (13') to be recorded as said control system's (2) control signal (13) as a response (S0) to said test sequence (T0) on a control signal logger (42);

17. The method of claim 1, said step of determining whether said response (S1) is generally similar to said signature response (S0) by conducting the following steps:
* forming a difference (D0-1) as a function of time between said first response or signature response (S0) and said second response (S1)
* forming a one-or-more-dimensional RMS difference from said difference as a function of time.
* deciding whether said difference (D0-1) is sufficiently small, i.e. smaller than some determined size, for said responses to be sufficiently similar, to verify that said control system (2) has been kept unchanged, or,
vice versa, if said difference (D0-1) is larger than said determined size, concluding that said control system (2) has been changed at or before the point of time of the second test.

18. The method of claim 16, denoting the multidimensional values of the sequence S0 at time uₙ $S ⁢ 0 \left({u}_{n , 1},{u}_{n , 2},{u}_{n , 3},{u}_{n , 4},..,{u}_{n , m}, .. , {u}_{n , K}\right) ,$
in which the first subscript n indicate time instants u₁, u₂, ..uₙ..., u_{N} , and the second subscript 1,2,3,4, ...m, .. ,K correspond control channel signals like (13a, 13b, 13c, .., 13m, .. ,13K), and in the same way the multidimensional values of S1 at the time instant un is $S ⁢ 1 \left({u}_{n , 1},{u}_{n , 2},{u}_{n , 3},{u}_{n , 4},.. ,{u}_{n , m}, .. , {u}_{n , K}\right) .$

19. The method of claim 17, removing high frequency components of the sequences S0 and S 1 by low-pass filtering S0 and S I , and denoting the filtered version of S0: $SF ⁢ 0 \left({u}_{n , 1},{u}_{n , 2},{u}_{n , 3},{u}_{n , 4},.. ,{u}_{n , m}, .. , {u}_{n , K}\right) ,$
and denoting the filtered version of S1: $SF ⁢ 1 \left({u}_{n , 1},{u}_{n , 2},{u}_{n , 3},{u}_{n , 4},.. ,{u}_{n , m}, .. , {u}_{n , K}\right) .$

20. The method of claim 17, calculating the difference between S0 and S 1 in terms of RMS values for the difference between the unfiltered S0 and S1: $RMS \left(S⁢0,S⁢1\right) = square root of \left\{\left[S⁢1\left(\left({u}_{1}\right)\right)-S⁢0\left(\left({u}_{1}\right)\right)\right]⁢2+\left[S⁢1\left(\left({u}_{2}\right)\right)-S⁢0\left(\left({u}_{2}\right)\right)\right]⁢2+…+\left[S⁢1\left(\left({u}_{N}\right)\right)-S⁢0\left(\left({u}_{N}\right)\right)\right]⁢2\right\} ,$
and denoting the difference between the time series as (D0-1) = RMS(S0, S 1).

21. The method of claim 17, calculating the difference between S0 and S 1 in terms of RMS value for the difference between the filtered time series SF0 and SF 1: $RMS \left(SF⁢0,SF⁢1\right) = square root of \left\{\left[SF⁢1\left(\left({u}_{1}\right)\right)-SF⁢0\left(\left({u}_{1}\right)\right)\right]⁢2+\left[SF⁢1\left(\left({u}_{2}\right)\right)-SF⁢0\left(\left({u}_{2}\right)\right)\right]⁢2+…+\left[SF⁢1\left(\left({u}_{N}\right)\right)-SF⁢0\left(\left({u}_{N}\right)\right)\right]⁢2\right\} ,$
and denoting the difference between the time series as (D0-1) = RMS(S0, S1).

22. A method according to claim 1 for a control system (2) in said marine surface vessel (4), where said control system (2) involves control and monitoring of said vessel (4) with control signals (13) to one or more actuators (3), where the method further comprises the following sequential steps:
* acquisition in real time of sensor signals (7) to said control system (2) from one or more sensors (8) over a first sensor signal line (12) to said control system (2);
* acquisition of command signals (9) to said control system (2) from a command input device (10) over a second signal line or command signal line (11) to said control system (2);
* computation in a control algorithm (31) in said control system (2) on basis of one or more of said sensor signals (7) and said command signals (9), and sending of said control signals (13) over a third signal line (14) to said actuators (3), **characterised by**
* disconnection of one or more of said sensor signals (7) from one or more of said sensors (8) or of said command signals (9) from said control input devices (10), so that the selected sensor signals (7) or command signals (9) do not flow to said control system (2), and replacement of one or more of said disconnected sensor signals (7) or said command signals (9), with corresponding simulated sensor signals (7') or simulated command signals (9') that are generated in a remote test laboratory 40) with respect to said vessel (4) and are sent over a communication line (6) over one or more of said signal lines (12, 14) to said control system (2);
* continuous computation in said control system (2) on basis of said real and/or said simulated sensor signals (7a or 7a', 7b or 7b', 7c or 7c', ..) or said real and/or said command signals (9a or 9a', 9b or 9b' , 9c or 9c', ..) of control signals (13'), and simulation in a first, local simulator (30L) by means of an algorithm (32) of a new dynamic state (50') of a vessel model (4') on basis of said control signals (13');
* sending of said control signals (13') over said communication line (6) to said remote test laboratory (40).

23. The method of claim 21, comprising the use of a remotely arranged simulator computer (30R) in said remote test laboratory (40) for transmitting said simulated sensor signals (7') and said simulated command signals (9') via said communication line (6) to said local simulator (30L) on said vessel, and receiving said control signals (13') from said local simulator computer (30L) via said communication line (6);

24. The method of claim 21, wherein said sensor signals (7) includes one or more of the following sensor parameters from said sensors (8):
- a position (7a) of said vessel from position sensors (8a), such as GPS receivers (8a); hydroacoustic position sensors (8h), integrating acceleration sensors, etc.;
- a course (7b) from course sensors (8b), e.g. a gyrocompass or some other compass;
- a velocity (7c) from a velocity sensor (8c) or an integrating acceleration sensor;
- a wind speed (7d) and a wind direction (7e) from an anemometer (8d, 8e);
- a roll angle (7f) from a roll angle sensor (8f);
- a pitch angle (7g) from a pitch angle sensor (8g).

25. The method of claim 21, wherein said control signals (13) includes signals (13a, 13b, 13c) in the form of shaft speed (13a, 13b) for one or more propellers (16) or thrusters (17), and angles (13c) for rudder (18) or thrusters (17) and possible other control devices to achieve one or more of desired position (9a), course (9b), velocity (9c).

26. The method of claim 21, wherein said propellers (16) includes one or more propellers (16a, 16b, 16c, ..).

27. The method of claim 21, wherein said control devices (18) includes one or more rudders (18a, 18b).

28. The method of claim 21, wherein said control devices (18) includes one or more thrusters (17).

29. The method of claim 21, wherein said command input device (10) includes at least one position specification device (10a), a wheel (10b), a velocity specification device (10c), or a device for specification of desired roll angle, pitch angle, heave compensation, etc. 10x) that gives a command signal for one or more of desired position (9a), desired course (9b), and desired velocity (9c) or some other desired variable (9x), e.g. desired roll angle, desired pitch angle, desired heave compensation, etc.

30. The method of claim 21, wherein said remote test laboratory (40) is used to verify that said control signals (13, 13') from said control system (2) on basis of said simulated sensor signals (7') and said simulated command signals (9') in a test, and possibly remaining real sensor signals (7) and remaining real command signals (9), are such that said control signals (13, 13') will lead to a desired state of said vessel (4), and where said control system (2) is certified on basis of this.

31. The method of claim 21, wherein the computation in said control algorithm (31) of said control system (2) uses dynamic parameters (5) of the vessel, including mass (m), the axial moments of inertia of the vessel, the mass distribution of the vessel, and hull parameters that determine the geometry of the hull.

32. The method of claim 21, wherein the disconnection of said sensor signals (7) from said sensors (8) to said control system (2) is done by means of a switch (15a) on said signal line (12).

33. The method of claim 21, wherein the disconnection of said command signals (8) from said command input device (10) to said control system (2) is done by means of a switch (15b) on said signal line (11).

34. The method of claim 21, wherein said remote test laboratory (40) is located on land, and where said vessel (4a, 4b, 4c, ...) that is tested is placed in long distance from said test laboratory (40), typically between 1 and 20000 km, and where the vessel that is tested is in a harbour, in a dock or a yard, moored, or at the open sea.

35. The method of claim 21, wherein failure situations are tested by disconnection one or more of selected signals at the time of said sensor signals (7) or said command signals (9) to simulate breakdown of components, and where the response of the control system in the form of said control signals (13, 13') and status signals (19, 19') are logged on a logger (15) in said remote test laboratory (40).

36. The method of claim 21, wherein failure situations are tested by changing or generating disturbances in a selection of said simulated sensor signals (7'), or by generating external disturbances like weather, wind, electrical noise to said simulated sensor signals (7') that are sent from said remote test laboratory (40) to said control system (2) in said vessel (4), and where the response of said control system (2) in the form of said control signals (13, 13') and said status signals (19, 19') are logged on said logger (15) in said remote test laboratory (40).

37. The method of claim 21, wherein new software for said control system (2) on board said vessel (4) is sent from said remote test laboratory (40) over said communication line (6).

38. The method of claim 21, wherein said remote test laboratory (40) on basis of a test of said control system (2) and the test result, is used to approve said control system (2) and to certify said control system (2) for regular use in said vessel (4).

## Patentansprüche

1. Verfahren zum Überprüfen eines Steuersystems (2) eines Oberflächenwasserfahrzeugs (4), wobei das genannte Steuersystem (2) in seinem wirksamen Zustand dazu angeordnet ist, Sensorsignale (7) von Sensoren (8) und Befehlssignale (9) von einer oder mehreren Befehlseingabevorrichtungen (10) zu empfangen und wobei das genannte Steuersystem (2) als Antwort auf die genannten Messwerte (7) und Befehlssignale (9) Steuersignale (13) an die Betätigungsvorrichtungen (3) des genannten Wasserfahrzeugs bereitstellt, um eine gewünschte Position, Geschwindigkeit, Kurs oder andere Zustandsvariable des genannten Wasserfahrzeugs (4) aufrecht zu erhalten;
wobei das genannte Verfahren durch die folgenden Schritte **gekennzeichnet** ist:
* Abtrennen, während einer ersten Zeit (t0), des Empfangs eines oder mehrerer echter Sensorsignale (7a, 7b, 7c, ..) an das genannte Steuersystem (2) und Ersetzen des genannten einen oder der genannten mehreren echten Sensorsignale durch eine, eine oder mehrere künstliche Messwerte (7a', 7b', 7c', ..) umfassende erste Prüfsequenz (T0) von einer Prüfsignalquelle (41) an das genannte Steuersystem (2);
* Arbeitenlassen des genannten Steuersystems (2) basierend auf den genannten echten und/oder künstlichen Sensorsignalen (7, 7'), um Steuersignale (13') zu erzeugen, die als eine Antwort (S0) auf die genannte erste Prüfsequenz (T0) während der genannten ersten Zeit (t0) als die Steuersignale (13) des genannten Steuersystems (2) auf einem Steuersignallogger (42) aufgezeichnet werden sollen;
* Speichern der Antwort (S0) des genannten Steuersystems (2) auf die genannte erste Prüfsequenz (T0) zur genannten ersten Zeit (t0) als "Erkennungsantwort" (S0) des genannten Steuersystems (2);
wobei das genannte Verfahren die Aufgabe hat, zu einer späteren Zeit (t1, t2, t3, ..) die selbe gegebene Prüfsequenzeingabe (T0) an das genannte Steuersystem (2) zu verwenden und eine spätere Antwort (S1, S2, S3, ..) vom genannten Steuersystem (2) aufzuzeichnen und festzustellen, ob die genannte spätere Antwort (S1, S2, S3, ..) der genannten Erkennungsantwort (S0) allgemein ähnlich ist, um zu überprüfen, dass das genannte Steuersystem (2) unverändert ist oder ob die genannte spätere Antwort (S1, S2, S3, ..) erheblich von der genannten Erkennungsantwort (S0) verschieden ist, um anzuzeigen, dass das genannte Steuersystem (2) verändert wurde.

2. Verfahren nach Anspruch 1, wobei das genannte Ersetzen eines oder mehrerer Sensorsignale (7a, 7b, 7c, ..) durch künstliche Sensorsignale (7a', 7b', 7c', ..) eine oder mehrere Signalsituationen umfasst:
* eine reine Abwesenheit oder Anwesenheit eines oder mehrerer künstlicher Sensorsignale (7a', 7b', 7c', ..);
* eine sprunghafte Veränderung eines oder mehrerer künstlicher Sensorsignale (7a', 7b', 7c, ..) innerhalb eines realistischen Bereichs;
* eine langsame Abwanderung oder Veränderung eines oder mehrerer künstlicher Signale (7a', 7b' 7c', ..) innerhalb eines realistischen Signalbereichs des entsprechenden echten Signals (7a, 7b, 7c, ..)
* Rauschen, "weiß", oder
* Überlagerung von Rauschen auf echte Messsignale (7) oder auf künstliche Messsignale (7').

3. Verfahren nach Anspruch 1, wobei die genannte Prüfsequenz (T0) eines oder mehrere aufgezeichnete echte Messsignale (7a oder 7a', 7b oder 7b', 7c oder 7c', 7d oder 7d', ..) umfasst.

4. Verfahren nach Anspruch 1, wobei die genannte Prüfsequenz (T0) in einem Speicher (44) gespeichert ist, der mit der genannten Prüfsignalquelle (41) verbunden ist.

5. Verfahren nach Anspruch 1, wobei die genannte Sequenz von Sensorsignalen (7') vorherbestimmte Sensorsignale (7') umfasst.

6. Verfahren nach Anspruch 1, wobei das genannte Verfahren zum Prüfen eines Steuersystems (2) für die dynamische Positionierung des Wasserfahrzeugs (4) zum Beibehalten einer gegebenen gewünschten Position (7a) innerhalb eines gegebenen Radius von der genannten Position (7a) für das genannte Wasserfahrzeug ist.

7. Verfahren nach Anspruch 1, wobei das genannte Verfahren zum Prüfen eines Steuersystems (2) für ein zum gewöhnlichen Fahren auf See angeordnetes Wasserfahrzeug (4), z. B. ein Passagierschiff, eine Fähre, ein Frachtschiff, ein Tanker oder dergleichen, das zwischen verschiedenen Destinationen oder von Wegpunkt zu Wegpunkt fährt, ist.

8. Verfahren nach Anspruch 1, umfassend das Senden der genannten Prüfsignalsequenz (T0) künstlicher Messwerte (7a', 7b', 7c', 7d', ..) an das genannte Steuersystem (2) über eine Kommunikationsleitung (6) von einem entfernten Prüflabor (40).

9. Verfahren nach Anspruch 1 oder 8, umfassend das Senden der genannten Steuersignalsequenz (S0, S1, S2) vom genannten Steuersystem (2) über eine Kommunikationsleitung (6) an ein Prüflabor (40).

10. Verfahren nach Anspruch 8 oder 9, umfassend die Verwendung eines entfernt angeordneten Simulatorcomputers (30R) im genannten entfernten Prüflabor (40) zum Senden der genannten simulierten Sensorsignale (7') und der genannten simulierten Befehlssignale (9') über die genannte Kommunikationsleitung (6) an den genannten lokalen Simulatorcomputer (30L) auf dem genannten Wasserfahrzeug und Empfangen der genannten Steuersignale (13') vom genannten lokalen Simulatorcomputer (30L) über die genannte Kommunikationsleitung (6);

11. Verfahren nach Anspruch 8 oder 9, wobei ein entfernt angeordneter Prüfungsmanager (33) im genannten entfernten Prüflabor (40) dazu angeordnet ist, einen Anfangswert des genannten simulierten Zustands (50'), eine Zeitsequenz der genannten simulierten Befehlssignale (9') und simulierte Werte für Seegang, Strömung, Windgeschwindigkeit und Windrichtung über die genannte Kommunikationsleitung (6) an den genannten lokalen Simulator (30L) auf dem genannten Wasserfahrzeug zu senden und die genannten Steuersignale (13') vom genannten lokalen Simulatorcomputer (30L) über die genannte Kommunikationsleitung (6) zu empfangen, wobei der genannte lokale Simulator (30L) mit dem genannten Steuersystem (2) verbunden ist, so dass das genannte Steuersystem die genannten simulierten Sensorsignale (9') und die genannten simulierten Befehlssignale (9') vom genannten lokalen Simulator (30L) erfasst und die genannten Steuersignale (13') an den genannten lokalen Simulator (30L) ausgibt.

12. Verfahren nach Anspruch 1, wobei die genannte Prüfsequenz (T0) an das genannte Steuersystem (2) bereitgestellte künstliche Messwertsignale (7a', 7b', 7c' 7d', ..) umfasst, wobei die genannten künstlichen Messwertsignale der gleichen Art sind wie echte Messwertsignale und z. B. einen ähnlichen Signalspannungsbereich, Signalstrombereich, einen ähnlichen logischen oder booleschen Bereich, einen ähnlichen digitalen Bereich und ein ähnliches Format bereitstellen.

13. Verfahren nach Anspruch 1, wobei es sich bei einem oder mehreren der genannten künstlichen Messwertsignale (7a', 7b', 7c', 7d', ..) um künstliche Messwertsignale handelt, die dem genannten echten Messwertsignal (7a, 7b, 7c, 7d, ..) überlagert sind.

14. Verfahren nach Anspruch 1, wobei es sich bei einem oder mehreren der genannten künstlichen Messwertsignale (7a', 7b', 7c', 7d', ..) um Rauschen handelt, das dem genannten echten Messwertsignal (7a, 7b, 7c, 7d, ..) überlagert ist.

15. Verfahren nach Anspruch 1, wobei die an das Steuersystem (2) gelieferten künstlichen Messwertsignale (7a', 7b', 7c', 7d', ..) eine vorherbestimmte Amplitudenveränderung mit der Zeit haben, wobei die genannte Amplitudenveränderung einen gewünschten Bereich hat.

16. Verfahren nach Anspruch 1, das weiter die folgenden Schritte umfasst:
* Abtrennen, zusätzlich zum Abtrennen des Empfangs von Sensorsignalen (7), des Empfangs eines oder mehrerer Befehlssignale (9a, 9b, 9c, ..) von der genannten Befehlseingabevorrichtung (10) an das genannte Steuersystem (2) und Ersetzen des genannten einen bzw. der genannten mehreren Befehlssignale (9a, 9b, 9c, ..) durch ein oder mehrere künstliche Befehlssignale (9a', 9b', 9c', ..), die von einer Prüfungsbefehlsvorrichtung (43) erzeugt werden, um in der genannten, an das Steuersystem (2) bereitgestellte Prüfsequenz (T0) aufgenommen zu werden;
* Arbeitenlassen des genannten Steuersystems (2) basierend auf den genannten echten und/oder künstlichen (oder weggelassenen) Sensorsignalen (7,7') und/oder den genannten künstlichen Befehlssignalen (9a', 9b', 9c', ..), um Steuersignale (13') zu erzeugen, die als eine Antwort (S0) auf die genannte Prüfsequenz (T0) als das Steuersignal (13) des genannten Steuersystems (2) auf einem Steuersignallogger (42) aufgezeichnet werden sollen.

17. Verfahren nach Anspruch 1, wobei der genannte Schritt des Feststellens, ob die genannte Antwort (S1) allgemein ähnlich der genannten Erkennungsantwort (S0) ist, indem die folgenden Schritte ausgeführt werden:
* Bilden einer Differenz (D0-1) als Funktion der Zeit zwischen der genannten ersten Antwort oder Erkennungsantwort (S0) und der genannten zweiten Antwort (S1),
* Bilden einer ein- oder mehrdimensionalen Effektivwertdifferenz aus der genannten Differenz als Funktion der Zeit,
* Entscheiden, ob die genannte Differenz (D0-1) ausreichend klein ist, d.h. kleiner als eine bestimmte Größe, damit die genannten Antworten ausreichend ähnlich sind, um zu überprüfen, dass das genannte Steuersystem (2) unverändert geblieben ist, oder,
umgekehrt, wenn die genannte Differenz (D0-1) größer ist als die genannte bestimmte Größe, Schließen, dass das genannte Steuersystem (2) zum oder vor dem Zeitpunkt der zweiten Prüfung verändert wurde.

18. Verfahren nach Anspruch 16, Bezeichnen der mehrdimensionalen Werte der Sequenz S0 zur Zeit uₙ : $S ⁢ 0 \left({u}_{n , 1},{u}_{n , 2},{u}_{n , 3},{u}_{n , 4},..,{u}_{n , m}, .., {u}_{n , K}\right) ,$
wobei der erste Index n Zeitpunkte u₁, u₂, .., ᵤₙ .., u_{N} angibt und der zweite Index 1, 2, 3, 4, .., m, ..,K Steuerkanalsignalen wie (13a, 13b, 13c, .., 13m,.. ,13K) entspricht und ebenso die mehrdimensionalen Werte von S1 zum Zeitpunkt un lauten: $S ⁢ 1 \left({u}_{n , 1},{u}_{n , 2},{u}_{n , 3},{u}_{n , 4},..,{u}_{n , m}, .., {u}_{n , K}\right) .$

19. Verfahren nach Anspruch 17, Entfernen von Hochfrequenzkomponenten der Sequenzen S0 und S1 durch Tiefpassfiltern von S0 und S1 und bezeichnen der gefilterten Version von S0: $SF ⁢ 0 \left({u}_{n , 1},{u}_{n , 2},{u}_{n , 3},{u}_{n , 4},..,{u}_{n , m}, .., {u}_{n , K}\right)$
und Bezeichnen der gefilterten Version von S1: $SF ⁢ 1 \left({u}_{n , 1},{u}_{n , 2},{u}_{n , 3},{u}_{n , 4},..,{u}_{n , m}, .., {u}_{n , K}\right) .$

20. Verfahren nach Anspruch 17, Berechnen der Differenz zwischen S0 und S1 ausgedrückt als Effektivwerte (RMS) für die Differenz zwischen den ungefilterten S0 und S1: $RMS \left(S⁢0,S⁢1\right) = Quadratwurzel von \left\{{\left[S⁢1\left(\left({u}_{1}\right)\right)-S⁢0\left(\left({u}_{1}\right)\right)\right]}^{2}+{\left[S⁢1\left(\left({u}_{2}\right)\right)-S⁢0\left(\left({u}_{2}\right)\right)\right]}^{2}+…+{\left[S⁢1\left(\left({u}_{N}\right)\right)-S⁢0\left(\left({u}_{N}\right)\right)\right]}^{2}\right\} ,$
und Bezeichnen der Differenz zwischen den Zeitfolgen als (D0-1) = RMS(S0, S1),

21. Verfahren nach Anspruch 17, Berechnen der Differenz zwischen S0 und S1, ausgedrückt als Effektivwert für die Differenz zwischen den gefilterten Zeitfolgen SF0 und SF1: $RMS \left(SF⁢0,SF⁢1\right) = Quadratwurzel von \left\{{\left[SF⁢1\left(\left({u}_{1}\right)\right)-SF⁢0\left(\left({u}_{1}\right)\right)\right]}^{2}+{\left[SF⁢1\left(\left({u}_{2}\right)\right)-SF⁢0\left(\left({u}_{2}\right)\right)\right]}^{2}+…+{\left[SF⁢1\left(\left({u}_{N}\right)\right)-SF⁢0\left(\left({u}_{N}\right)\right)\right]}^{2}\right\} ,$
und Bezeichnen der Differenz zwischen den Zeitfolgen als (D0-1) = RMS(S0, S1),

22. Verfahren nach Anspruch 1 für ein Steuersystem (2) im genannten Oberflächenwasserfahrzeug (4), wobei das genannte Steuersystem (2) die Steuerung und Überwachung des genannten Wasserfahrzeugs (4) mit Steuersignalen (13) an eine oder mehrere Betätigungsvorrichtungen (3) umfasst, wobei das Verfahren weiter die folgenden aufeinanderfolgenden Schritte umfasst:
* Erfassung in Echtzeit von Sensorsignalen (7) an das genannte Steuersystem (2) von einem oder mehreren Sensoren (8) über eine erste Sensorsignalleitung (12) an das genannte Steuersystem (2);
* Erfassung von Befehlssignalen (9) an das genannte Steuersystem (2) von einer Befehlseingabevorrichtung (10) über eine zweite Signalleitung oder Befehlssignalleitung (11) an das genannte Steuersystem (2);
* Berechnung in einem Steueralgorithmus (31) im genannten Steuersystem (2) auf der Basis eines oder mehrerer der genannten Sensorsignale (7) und der genannten Befehlssignale (9) und Senden der genannten Steuersignale (13) über eine dritte Signalleitung (14) an die genannten Betätigungsvorrichtungen (3), **gekennzeichnet durch**:
* Abtrennen eines oder mehrerer der genannten Sensorsignale (7) von einem oder mehreren der genannten Sensoren (8) oder der genannten Befehlssignale (9) von den genannten Befehlseingabevorrichtungen (10), so dass die gewählten Sensorsignale (7) bzw. Befehlssignale (9) nicht an das genannte Steuersystem (2) fließen und Ersetzten eines oder mehrerer der genannten Sensorsignale (7) bzw. Befehlssignale (9) **durch** entsprechende simulierte Sensorsignale (7') bzw. simulierte Befehlssignale (9'), die in einem entfernten Prüflabor (40) in Bezug auf das genannte Wasserfahrzeug (4) erzeugt werden und über eine Kommunikationsleitung (6) über eine oder mehrere der genannten Signalleitungen (12,14) an das genannte Steuersystem (2) gesendet werden;
* kontinuierliche Berechnung im genannten Steuersystem (2) auf der Basis der genannten echten und/oder der genannten simulierten Sensorsignale (7a oder 7a', 7b oder 7b', 7c oder 7c', ..) bzw. der genannten echten und/oder der genannten Befehlssignale (9a oder 9a', 9b oder 9b', 9c oder 9c', ..) von Steuersignalen (13') und Simulation in einem ersten, lokalen Simulator (30L) eines neuen dynamischen Zustands (50') eines Wasserfahrzeugmodells (4') auf der Basis der genannten Steuersignale (13') mittels eines Algorithmus (32);
* Senden der genannten Steuersignale (13') über die genannte Kommunikationsleitung (6) an das genannte entfernte Prüflabor (40).

23. Verfahren nach Anspruch 21, umfassend die Verwendung eines entfernt angeordneten Simulatorcomputers (30R) im genannten entfernten Prüflabor (40) zum Senden der genannten simulierten Sensorsignale (7') und der genannten simulierten Befehlssignale (9') über die genannte Kommunikationsleitung (6) an den genannten lokalen Simulator (30L) auf dem genannten Wasserfahrzeug und Empfangen der genannten Steuersignale (13') vom genannten lokalen Simulatorcomputer (30L) über die genannte Kommunikationsleitung (6);

24. Verfahren nach Anspruch 21, wobei die genannten Sensorsignale (7) einen oder mehrere der folgenden Sensorparameter von den genannten Sensoren (8) umfasst:
- eine Position (7a) des genannten Wasserfahrzeugs von Positionssensoren (8a), wie beispielsweise GPS Empfängern (8a); hydroakustischen Positionssensoren (8h), integrierenden Beschleunigungssensoren usw.;
- einen Kurs (7b) von Kurssensoren (8b), z. B. einem Kreiselkompass oder einem anderen Kompass;
- eine Geschwindigkeit (7c) von einem Geschwindigkeitssensor (8c) oder einem integrierenden Beschleunigungssensor;
- eine Windgeschwindigkeit (7d) und eine Windrichtung (7e) von einem Anemometer (8d, 8e);
- einen Rollwinkel (7f) von einem Rollwinkelsensor (8f);
- einen Nickwinkel (7g) von einem Nickwinkelsensor (8g).

25. Verfahren nach Anspruch 21, wobei die genannten Steuersignale (13) Signale (13a, 13b, 13c) in der Form von Wellendrehzahl (13a, 13b) für eine oder mehrere Schiffsschrauben (16) oder Strahlruder (17) und Winkel (13c) für Ruder (18) oder Strahlruder (17) und mögliche andere Steuervorrichtungen umfassen, um die gewünschte Position (9a) und/oder den gewünschten Kurs (9b) und/oder die gewünschte Geschwindigkeit (9c) zu erreichen.

26. Verfahren nach Anspruch 21, wobei die genannten Schiffsschrauben (16) eine oder mehrere Schiffsschrauben (16a, 16b, 16c,..) umfassen.

27. Verfahren nach Anspruch 21, wobei die genannten Steuervorrichtungen (18) ein oder mehrere Ruder (18a, 18b) umfassen.

28. Verfahren nach Anspruch 21, wobei die genannten Steuervorrichtungen (18) ein oder mehrere Strahlruder (17) umfassen.

29. Verfahren nach Anspruch 21, wobei die genannte Befehlseingabevorrichtung (10) mindestens eine Positionsvorgabevorrichtung (10a), ein Steuerrad (10b), eine Geschwindigkeitsvorgabevorrichtung (10c) oder eine Vorrichtung zum Vorgeben von gewünschtem Rollwinkel, Nickwinkel, Stampfausgleich usw. (10x) umfasst, die ein Befehlssignal für gewünschte Position (9a) und/oder gewünschten Kurs (9b) und/oder gewünschte Geschwindigkeit (9c) oder eine andere gewünschte Variable (9x), z. B. gewünschter Rollwinkel, gewünschter Nickwinkel, gewünschter Stampfausgleich usw. ausgibt.

30. Verfahren nach Anspruch 21, wobei das genannte entfernte Prüflabor (40) verwendet wird, um zu überprüfen, dass die genannten Steuersignale (13, 13') vom genannten Steuersystem (2) auf der Basis der genannten simulierten Sensorsignale (7') und der genannten simulierten Befehlssignale (9') in einer Prüfung und möglicherweise verbleibende echte Sensorsignale (7) und verbleibende echte Befehlssignale (9) derart sind, dass die genannten Steuersignale (13, 13') zu einem gewünschten Zustand des genannten Wasserfahrzeug (4) führen und wobei das genannte Steuersystem (2) auf der Basis desselben zertifiziert wird.

31. Verfahren nach Anspruch 21, wobei die Berechnung im genannten Steueralgorithmus (31) des genannten Steuersystems (2) dynamische Parameter (5) des Wasserfahrzeugs nutzt, einschließlich Masse (m), der axialen Trägheitsmomente des Wasserfahrzeugs, der Massenverteilung des Wasserfahrzeugs und Rumpfparametern, die die Geometrie des Rumpfs bestimmen.

32. Verfahren nach Anspruch 21, wobei das Abtrennen der genannten Sensorsignale (7) von den genannten Sensoren (8) an das genannte Steuersystem (2) mittels eine Schalters (15a) auf der genannten Signalleitung (12) erfolgt.

33. Verfahren nach Anspruch 21, wobei das Abtrennen der genannten Befehlssignale (8) von den genannten Befehlseingabevorrichtungen (10) an das genannte Steuersystem (2) mittels eine Schalters (15b) auf der genannten Signalleitung (11) erfolgt.

34. Verfahren nach Anspruch 21, wobei sich das genannte entfernte Prüflabor (40) an Land befindet und wobei das genannte Wasserfahrzeug (4a, 4b, 4c, ..), das geprüft wird, in großer Entfernung vom genannten Prüflabor (40) platziert ist, typischerweise zwischen 1 und 20000 km und wobei sich das Schiff, das geprüft wird, in einem Hafen, an einem Kai oder in einer Werft, festgemacht oder auf offener See befindet.

35. Verfahren nach Anspruch 21, wobei Ausfallsituationen geprüft werden, indem eines oder mehrere ausgewählte Signale zur Zeit der genannten Sensorsignale (7) oder der genannten Befehlssignale (9) abgetrennt werden, um den Ausfall von Komponenten zu simulieren und wobei die Antwort des Steuersystems in Form der genannten Steuersignale (13, 13') und Statussignale (19, 19') auf einem Logger (15) im genannten entfernten Prüflabor (40) aufgezeichnet wird.

36. Verfahren nach Anspruch 21, wobei Ausfallsituationen geprüft werden, indem in einer Auswahl der genannten simulierten Sensorsignale (7') Störungen erzeugt oder sie verändert werden, oder indem externe Störungen wie Wetter, Wind, elektrisches Rauschen der simulierten Sensorsignale (7') erzeugt werden, die vom genannten enternten Prüflabor (40) an das genannte Steuersystem (2) im genannten Wasserfahrzeug (4) gesendet werden und wobei die Antwort des Steuersystems (2) in Form der genannten Steuersignale (13, 13') und der genannten Statussignale (19,19') auf dem genannten Logger (15) im genannten entfernten Prüflabor (40) aufgezeichnet werden.

37. Verfahren nach Anspruch 21, wobei neue Software für das genannte Steuersystem (2) an Bord des genannten Wasserfahrzeugs (4) vom genannten Prüflabor (40) über dei genannte Kommunikationsleitung (6) gesendet wird.

38. Verfahren nach Anspruch 21, wobei das genannte entfernte Prüflabor (40) auf der Basis einer Prüfung des genannten Steuersystems (2) und des Prüfergebnisses verwendet wird, um das genannte Steuersystem (2) zuzulassen und das genannte Steuersystem (2) für den regulären Einsatz im genannten Wasserfahrzeug (4) zu zertifizieren.

## Revendications

1. Méthode qui consiste à vérifier un système de régulation (2) à bord d'un bâtiment de surface de la marine (4), dans lequel le système de régulation (2) reçoit, lorsqu'il est opérationnel, des signaux de mesure (7) rovenant de plusieurs capteurs (8) ainsi que des signaux de commande (9) provenant d'un ou de plusieurs unités d'introduction des commandes (10), et dans lequel le système de régulation (2), réagissant aux signaux de mesure (7) et aux signaux de commande (9), transmet des signaux de régulation (13) aux organes de commande (3) du navire afin d'en maintenir la position, la vitesse, le cap ou toute autre variable requise pour le navire (4);
la méthode étant **caractérisée par** les étapes suivantes :
* au cours d'un premier moment (t0), cette méthode sert à déconnecter la réception d'un ou de plusieurs signaux réels de capteurs (7a, 7b, 7c, ...) se rendant au système de régulation (2), et elle remplace un ou plusieurs de ces signaux réels de capteurs par une première séquence de test (TO) comprenant une ou plusieurs mesures artificielles (7a', 7b', 7c', ...) qui proviennent d'une source de signaux de test (41) et qui se rendent au système de régulation (2) ;
* sur la base de signaux réels et / ou artificiels de capteurs (7, 7'), elle permet au système de régulation (2) de générer des signaux de régulation (13') qui seront enregistrés, en tant que signaux de régulation (13) du système de régulation (2) en tant que réponse (S0) à la première séquence de test (TO) pour le premier moment (t0), sur un enregistreur de signaux de régulation (42);
• elle permet de ranger en mémoire la réponse (S0) du système de régulation (2) à la première séquence de test (TO) pour le premier moment (t0) en tant que réponse "signature" (S0) du système de régulation (2) ;
cette méthode ayant pour but, à un moment ultérieur (t1, t2, t3, ...), d'employer la même séquence de test (TO) introduite dans le système de régulation (2) et d'enregistrer une réponse ultérieure (S1, S2, S3, ...) provenant du système de régulation (2), et aussi de déterminer si cette réponse ultérieure (S1, S2, S3,...) est généralement similaire à la réponse signature (S0) afin de vérifier si le système de régulation (2) reste inchangé, ou bien si cette réponse ultérieure (S1, S2, S3,...) est sensiblement différente de la réponse signature (S0), ce qui indiquerait que le système de régulation (2) a fait l'objet d'une modification.

2. Méthode selon la revendication 1, **caractérisée en ce que** le remplacement d'un ou de plusieurs signaux réels de capteurs (7a, 7b, 7c, ...) par des signaux artificiels de capteurs (7a', 7b', 7c', ...) comporte une ou plusieurs conditions pour les signaux:
* la simple absence ou présence d'un ou de plusieurs signaux artificiels de capteurs (7a', 7b', 7c', ...) ;
• le changement indiciel d'un ou de plusieurs signaux artificiels de capteurs (7a', 7b', 7c', ...) dans une plage réaliste;
• une dérive ou une variation lente d'un ou de plusieurs signaux artificiels de capteurs (7a', 7b', 7c', ...) dans une plage réaliste du signal réel correspondant (7a, 7b, 7c, ...) ;
• du bruit « blanc »; ou
• la superposition du bruit sur des signaux réels de mesure (7) ou sur des signaux artificiels de mesure (7').

3. Méthode selon la revendication 1, **caractérisée en ce que** la séquence de test (TO) comporte un ou plusieurs signaux de mesure réels enregistrés (7a ou 7a', 7b ou 7b', 7c ou 7c', 7d ou 7d', ...).

4. Méthode selon la revendication 1, **caractérisée en ce que** la séquence de test (TO) est rangée dans une mémoire (44) qui est connectée à la source de signaux de test (41).

5. Méthode selon la revendication 1, **caractérisée en ce que** la séquence de signaux de capteurs (7') comporte des signaux de capteurs prédéterminés (7').

6. Méthode selon la revendication 1, **caractérisée en ce que** cette méthode est employée pour tester un système de régulation (2) servant à assurer le positionnement dynamique du navire (4) qui maintiendra alors une certaine position requise (7a) dans un rayon d'action donné à partir de la position (7a) du navire.

7. Méthode selon la revendication 1, **caractérisée en ce que** cette méthode est employée pour tester un système de régulation (2) pour un navire (4) qui navigue en mer, comme par exemple un navire à passagers, un ferry-boat, un cargo, un navire-citerne, ou un autre navire similaire naviguant entre différents ports de destination ou bien entre un point de cheminement et un autre.

8. Méthode selon la revendication 1, qui consiste par ailleurs à transmettre au système de régulation (2) sur une ligne de communication la séquence de signaux de test (TO) comportant les mesures artificielles (7a', 7b', 7c', 7d',...) (6) en provenance d'un laboratoire de test à distance (40).

9. Méthode selon la revendication 1 ou 8, qui consiste par ailleurs à transmettre la séquence de signaux de régulation (S0, S1, S2) à partir du système de régulation (2) sur une ligne de communication (6) en direction d'un laboratoire de test (40).

10. Méthode selon la revendication 8 ou 9, qui consiste par ailleurs à utiliser un ordinateur de simulation (30R) situé dans le laboratoire de test à distance (40), et servant à transmettre les signaux simulés de capteurs (7') et les signaux de commande simulés (9') sur la ligne de communication (6) en direction de l'ordinateur de simulation local (30L) à bord du navire, et servant aussi à recevoir sur cette ligne de communication (6) les signaux de régulation (13') provenant de l'ordinateur de simulation local (30L).

11. Méthode selon la revendication 8 ou 9, **caractérisée en ce qu'**un gestionnaire de test (33) est prévu dans le laboratoire de test à distance (40), et il sert à transmettre une valeur initiale de l'état simulé (50'), une séquence temporelle des signaux de commande simulés (9'), ainsi que des valeurs simulées pour l'état de la mer, le courant, la vitesse du vent et la direction du vent sur la ligne de communication (6) en direction du simulateur local (30L) à bord du navire, et aussi à recevoir les signaux de régulation (13') provenant de l'ordinateur de simulation local (30L) sur cette ligne de communication (6), l'ordinateur de simulation local (30L) étant connecté au système de régulation (2) de telle manière que le système de régulation reçoit les signaux simulés de capteur (9') et les signaux de commande simulés (9') en provenance du simulateur local (30L), et transmet ces signaux de régulation (13') au simulateur local (30L).

12. Méthode selon la revendication 1, **caractérisée en ce que** la séquence de test (TO) comporte des signaux de mesure artificiels (7a', 7b', 7c', 7d', ...) transmis au système de régulation (2), ces signaux de mesure artificiels étant du même type que les signaux de mesure réels, c'est-à-dire qu'ils présentent des valeurs similaires pour la plage de tension des signaux, la plage de courant des signaux, la plage logique ou booléenne, la plage numérique et le format.

13. Méthode selon la revendication 1, **caractérisée en ce que** l'un ou plusieurs des signaux de mesure artificiels (7a', 7b', 7c', 7d', ...) représentent des mesures artificielles superposées sur les signaux de mesure réels (7a, 7b, 7c, 7d, ...).

14. Méthode selon la revendication 1, **caractérisée en ce que** l'un ou plusieurs des signaux de mesure artificiels (7a', 7b', 7c', 7d', ...) représentent du bruit superposé sur les signaux de mesure réels (7a, 7b, 7c, 7d, ...).

15. Méthode selon la revendication 1, **caractérisée en ce que** les signaux de mesure artificiels (7a', 7b', 7c', 7d', ...) transmis au système de regulation (2) sont d'une amplitude déterminée qui varie avec le temps, cette variation d'amplitude étant comprise dans une plage donnée.

16. Méthode selon la revendication 1, comportant par ailleurs les étapes suivantes:
* outre le fait d'interrompre la réception des signaux de capteurs (7), la méthode sert à interrompre la réception d'un ou de plusieurs signaux de commande (9a, 9b, 9c,...) partant de l'unité d'introduction des commandes (10) et se rendant au système de régulation (2), et à remplacer l'un ou plusieurs des signaux de commande (9a, 9b, 9c, ...) par un ou plusieurs signaux de commande artificiels (9a', 9b', 9c', ...) qui sont générés par un dispositif de commande de test (43), ces signaux faisant alors partie de la séquence de test (T0) transmise au système de régulation (2);
* sur la base des signaux réels et / ou artificiels (ou bien omis) des capteurs (7, 7') et / ou des signaux de commande artificiels (9a', 9b', 9c', ...), elle permet au système de régulation (2) de générer des signaux de régulation (13') qui seront enregistrés, en tant que signal de régulation (13) du système de régulation (2) en réponse (S0) à la séquence de test (TO), sur un enregistreur de signaux de régulation (42).

17. Méthode selon la revendication 1, qui cherche à déterminer si la réponse (S1) est généralement similaire à la réponse signature (S0) en procédant par les étapes suivantes :
* elle produit une différence (D0-1) en tant que fonction du temps qui sépare la première réponse, qui est la réponse signature (S0) de la deuxième réponse (S1);
* elle produit une différence uni-dimensionnelle ou multi-dimensionnelle de valeur efficace à partir de la première différence, cela en fonction du temps;
* elle détermine si cette différence (D0-1) est suffisamment faible, c'est-à-dire plus petite qu'une grandeur déterminée donnée, pour que les réponses soient suffisamment similaires, afin de vérifier si le système de régulation (2) reste inchangé, ou bien si, au contraire, cette différence (D0-1) dépasse la grandeur déterminée donnée, ce qui indiquerait que le système de régulation (2) a fait l'objet d'une modification au moment du deuxième test ou avant ce moment.

18. Méthode selon la revendication 16, indiquant les valeurs multidimensionnelles de la séquence S0 au moment uₙ $S ⁢ 0 \left({u}_{n , 1},{u}_{n , 2},{u}_{n , 3},{u}_{n , 4},…,{u}_{n , m}, …, {u}_{n , K}\right) ,$
où le premier indice inférieur n indique les moments u₁, u₂, .... uₙ,...., u_{N}, et où le deuxième indice inférieur 1, 2, 3, 4, ... m, ...., K correspond aux signaux de régulation, comme par exemple (13a, 13b, 13c, ..., 13m, ..., 13K), et de la même façon les valeurs multidimensionnelles de S1 au moment uₙ sont les suivantes $S ⁢ 1 \left({u}_{n , 1},{u}_{n , 2},{u}_{n , 3},{u}_{n , 4},…,{u}_{n , m}, …, {u}_{n , K}\right) .$

19. Méthode selon la revendication 17, **caractérisée en ce qu'**elle élimine les composantes haute fréquence des séquences S0 et S1 en soumettant ces séquences à un filtrage passe-bas et **en ce qu'**elle indique la version filtrée de S0: $SF ⁢ 0 \left({u}_{n , 1},{u}_{n , 2},{u}_{n , 3},{u}_{n , 4},…,{u}_{n , m}, …, {u}_{n , K}\right) ,$
et aussi **en ce qu'**elle indique la version filtrée de S1: $SF ⁢ 1 \left({u}_{n , 1},{u}_{n , 2},{u}_{n , 3},{u}_{n , 4},…,{u}_{n , m}, …, {u}_{n , K}\right) .$

20. Méthode selon la revendication 17, qui consiste à calculer la différence entre S0 et S1 en termes des valeurs efficaces pour la différence entre les séries temporelles S0 et S1 non filtrées : $Valeur efficace \left(S⁢0,S⁢1\right) = racine carrée de { {\left[S⁢1\left(\left({u}_{1}\right)\right)-S⁢0\left(\left({u}_{1}\right)\right)\right]}^{2} + {\left[S⁢1\left(\left({u}_{2}\right)\right)-S⁢0\left(\left({u}_{2}\right)\right)\right]}^{2} + … + {\left[S⁢1\left(\left({u}_{N}\right)\right)-S⁢0\left(\left({u}_{N}\right)\right)\right]}^{2}$
et à indiquer la différence entre les séries temporelles comme étant (D0-1) = Valeur efficace (S0, S1).

21. Méthode selon la revendication 17, qui consiste à calculer la différence entre S0 et S1 en termes des valeurs efficaces pour la différence entre les séries temporelles filtrées SF0 et SF1 : $Valeur efficace \left(SF⁢0,SF⁢1\right) = racine carrée de { {\left[SF⁢1\left(\left({u}_{1}\right)\right)-SF⁢0\left(\left({u}_{1}\right)\right)\right]}^{2} + {\left[SF⁢1\left(\left({u}_{2}\right)\right)-SF⁢0\left(\left({u}_{2}\right)\right)\right]}^{2} + … + {\left[SF⁢1\left(\left({u}_{N}\right)\right)-SF⁢0\left(\left({u}_{N}\right)\right)\right]}^{2}$
et à indiquer la différence entre les séries temporelles comme étant (D0-1) = Valeur efficace (S0, S1).

22. Méthode selon la revendication 1, portant sur un système de régulation (2) à bord du bâtiment de surface de la marine (4), dans lequel le système de régulation (2) assure la régulation et le contrôle du navire (4) au moyen de signaux de régulation (13) transmis à un ou plusieurs organes de commande (3), la méthode comportant en outre les étapes séquentielles suivantes :
• acquisition en temps réel des signaux de capteurs (7) transmis au système de régulation (2) par ou un plusieurs capteurs (8) sur une première ligne de transmission de signaux des capteurs (12);
* acquisition des signaux de commande (9) transmis au système de régulation (2) par une unité d'introduction des commandes (10) sur une deuxième ligne de transmission de signaux des capteurs ou une ligne de transmission de signaux de commande (11);
• calcul dans un algorithme de régulation (31) à l'intérieur du système de régulation (2), sur la base d'un ou de plusieurs signaux des capteurs (7) et de signaux de commande (9), et transmission de ces signaux de régulation (13) sur une troisième ligne de transmission de signaux (14) en direction des organes de commande (3), méthode **caractérisée par**
• la coupure d'un ou de plusieurs signaux de capteurs (7) provenant d'un ou de plusieurs capteurs (8), ou bien la coupure des signaux de commande (9) provenant des unités d'introduction des commandes (10), conduisant au fait que les signaux de capteurs sélectionnés (7) ou les signaux de commande (9) ne parviennent pas au système de régulation (2), et aussi le remplacement d'un ou de plusieurs signaux de capteurs (7) ou d'un ou de plusieurs signaux de commande (9) par des signaux correspondants de capteurs simulés (7') ou des signaux correspondants de commande simulés (9') qui sont générés dans un laboratoire de test à distance (40) par rapport au navire (4), et sont transmis sur une ligne de communication (6) comportant une ou plusieurs lignes de transmission des signaux (12, 14) en direction du système de régulation (2);
• le calcul continu, dans le système de régulation (2) sur la base des signaux de capteurs réels et/ou simulés (7a ou 7a, 7b ou 7b', 7c ou 7c', ...) ou des signaux de commande réels et/ou simulés (9a ou 9a', 9b ou 9b', 9c ou 9c', ...), des signaux de régulation (13'), et la simulation dans un premier simulateur local (30L) au moyen d'un algorithme (32) d'un nouvel état dynamique (50') du modèle de navire (4') sur la base de ces signaux de régulation (13');
• la transmission de ces signaux de régulation (13') sur la ligne de communication (6) en direction du laboratoire de test à distance (40).

23. Méthode selon la revendication 21, qui consiste par ailleurs à utiliser un ordinateur de simulation (30R) situé dans le laboratoire de test à distance (40), et servant à transmettre les signaux simulés de capteurs (7') et les signaux de commande simulés (9') sur la ligne de communication (6) en direction du simulateur local (30L) à bord du navire, et servant aussi à recevoir les signaux de régulation (13') provenant de l'ordinateur de simulation local (30L) sur cette ligne de communication (6).

24. Méthode selon la revendication 21, **caractérisée en ce que** les signaux de capteurs (7) portent sur l'un ou plusieurs des paramètres suivants provenant des capteurs (8):
* une position (7a) pour le navire indiquée par les capteurs de position (8a), comme par exemple les récepteurs GPS (8a), les capteurs de position hydro-acoustiques (8h), les capteurs d'accélération à intégration, etc.;
* un cap (7b) indiqué par les capteurs de cap (8b), comme par exemple un compas gyroscopique ou autre type de compas;
* une vitesse (7c) indiquée par un capteur de vitesse (8c) ou un capteur d'accélération à intégration;
* une vitesse du vent (7d) et une direction du vent (7e) indiquées par un anémomètre (8d, 8e);
* un angle de roulis (7f) indiqué par un capteur d'angle de roulis (8f);
* un angle de tangage (7g) indiqué par un capteur d'angle de tangage (8g).

25. Méthode selon la revendication 21, **caractérisée en ce que** les signaux de régulation (13) comportent des signaux (13a, 13b, 13c) sous forme de vitesse de rotation d'arbre (13a, 13b) pour une ou plusieurs hélices (16) ou pour un ou plusieurs propulseurs d'étrave (17), et sous forme d'angles (13c) pour le gouvernail (18) ou les propulseurs d'étrave (17) et peut-être aussi pour d'autres dispositifs de régulation éventuels en vue de réaliser les conditions requises de position (9a), de cap (9b), de vitesse (9c).

26. Méthode selon la revendication 21, **caractérisée en ce que** le groupe d'hélices (16) comprend effectivement une ou plusieurs hélices (16a, 16b, 16c, ...).

27. Méthode selon la revendication 21, **caractérisée en ce que** les dispositifs de régulation (18) comportent un ou plusieurs gouvernails (18a, 18b).

28. Méthode selon la revendication 21, **caractérisée en ce que** les dispositifs de régulation (18) comportent un ou plusieurs propulseurs d'étrave (17).

29. Méthode selon la revendication 21, **caractérisée en ce que** l'unité d'introduction des commandes (10) comporte au moins un dispositif qui précise la position (10a), une roue (10b), un dispositif qui précise la vitesse (10c), ou un dispositif qui précise les valeurs requises pour l'angle de roulis, l'angle de tangage, la compensation de houle, etc. 10x) qui transmet un signal de commande pour une ou plusieurs des variables suivantes: position requise (9a), cap requis (9b) , et vitesse requise (9c) ou bien quelque autre variable voulue (9x), comme par exemple l'angle de roulis requis, l'angle de tangage requis, la compensation de houle requise, etc.

30. Méthode selon la revendication 21, **caractérisée en ce que** le laboratoire de test à distance (40) sert à vérifier que les signaux de régulation (13, 13') provenant du système de régulation (2) sur la base des signaux simulés de capteurs (7') et des signaux de commande simulés (9') au cours d'un test, et peut-être aussi le reste des signaux réels de capteurs (7) et le reste des signaux de commande réels (9), sont d'une telle valeur que les signaux de régulation (13, 13') permettront d'obtenir l'état requis pour le navire (4), et de certifier par conséquent le système de régulation (2).

31. Méthode selon la revendication 21, **caractérisée en ce que** le calcul effectué dans l'algorithme de régulation (31) du système de régulation (2) emploie des paramètres dynamiques (5) pour le navire, entre autres la masse (m), les moments d'inertie axiaux du navire, la répartition de masse du navire, et les paramètres de la coque qui déterminent la géométrie de la coque.

32. Méthode selon la revendication 21, **caractérisée en ce que** la coupure des signaux de capteurs (7) provenant de ces capteurs (8) et se rendant au système de régulation (2) se fait au moyen d'un interrupteur (15a) placé dans la ligne de transmission des signaux (12).

33. Méthode selon la revendication 21, **caractérisée en ce que** la coupure des signaux de commande (8) provenant de l'unité d'introduction des commandes (10) et se rendant au système de régulation (2) se fait au moyen d'un interrupteur (15b) placé dans cette ligne de transmission des signaux (11).

34. Méthode selon la revendication 21, **caractérisée en ce que** le laboratoire de test à distance (40) est situé à terre, **en ce que** le navire (4a, 4b, 4c, ...) qui est testé se trouve très loin du laboratoire de test (40), à une distance typique comprise entre 1 et 20.000 km, et aussi **en ce que** le navire testé se trouve dans un port, dans un dock ou un chantier naval, qu'il est amarré ou bien qu'il navigue en grande mer.

35. Méthode selon la revendication 21, **caractérisée en ce que** les situations de défaillance sont testées par la coupure d'un ou de plusieurs signaux sélectionnés qui seront des signaux de capteurs (7) ou des signaux de commande (9), ceci pour simuler la défaillance des composants, et **caractérisée** aussi **en ce que** la réponse du système de régulation, qui se présente sous forme de signaux de régulation (13, 13') et de signaux indiquant l'état (19, 19'), est relevée sur un enregistreur (15) qui se trouve dans le laboratoire de test à distance (40).

36. Méthode selon la revendication 21, **caractérisée en ce que** les situations de défaillance sont testées par le changement ou la production de perturbations dans un nombre sélectionné de signaux simulés de capteurs (7'), ou par la production de perturbations, comme par exemple les conditions météorologiques, le vent, le bruit électrique, agissant sur les signaux simulés de capteurs (7'), qui sont transmises par le laboratoire de test à distance (40) en direction du système de régulation (2) à bord du navire (4), et **caractérisée** aussi **en ce que** la réponse du système de régulation (2), qui se présente sous forme de signaux de régulation (13, 13') et de signaux indiquant l'état (19, 19'), est relevée sur l'enregistreur (15) qui se trouve dans le laboratoire de test à distance (40).

37. Méthode selon la revendication 21, **caractérisée en ce que** le nouveau logiciel destiné au système de régulation (2) à bord du navire (4) est transmis à partir du laboratoire de test à distance (40) sur la ligne de communicaton (6).

38. Méthode selon la revendication 21, **caractérisée en ce que**, sur la base d'un test du système de régulation (2) et du résultat de ce test, le laboratoire de test à distance (40) sert à approuver le système de régulation (2) et à certifier l'utilisation normale du système de régulation (2) à bord du navire (4).
